(19) Europäisches Patentamt / European Patent Office / Office européen des brevets

(11) **EP 1 557 693 B1**

(12) **EUROPÄISCHE PATENTSCHRIFT**

(45) Veröffentlichungstag und Bekanntmachung des Hinweises auf die Patenterteilung:
**20.05.2009   Patentblatt 2009/21**

(51) Int Cl.:
*G01S 17/93* (2006.01)        *G01S 13/93* (2006.01)
*G01S 7/41* (2006.01)        *G01S 7/48* (2006.01)

(21) Anmeldenummer: **05001435.6**

(22) Anmeldetag: **25.01.2005**

(54) **Verfahren zur Verfolgung von Objekten**

Method for tracking objects

Procédé de poursuite d'objets

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.01.2004   DE 102004003868**

(43) Veröffentlichungstag der Anmeldung:
**27.07.2005   Patentblatt 2005/30**

(73) Patentinhaber: **IBEO Automobile Sensor GmbH 22179 Hamburg (DE)**

(72) Erfinder:
• **Fürstenberg, Kay
  89075 Ulm (DE)**
• **Kämpchen, Nico
  89081 Ulm (DE)**
• **Lages, Ulrich, Dr.
  21031 Hamburg (DE)**
• **Dietmayer, Klaus, Prof. Dr.
  89075 Ulm (DE)**

(74) Vertreter: **Manitz, Finsterwald & Partner GbR
Postfach 31 02 20
80102 München (DE)**

(56) Entgegenhaltungen:
**EP-A- 1 094 336        US-A1- 2001 052 844
US-A1- 2003 103 197**

**Beschreibung**

Die vorliegende Erfindung betrifft ein Verfahren zur Verfolgung von Objekten, die Gegenständen im Erfassungsbereich eines Sensors für elektromagnetische Strahlung, insbesondere eines Laserscanners, entsprechen, auf der Basis von in zeitlicher Folge von dem Sensor erfassten Abstandsbildern des Erfassungsbereichs.

Verfahren der oben genannten Art sind grundsätzlich bekannt. Sie können dazu verwendet werden, Gegenstände in dem Erfassungsbereich zu erkennen und deren Bewegung zu verfolgen. Dazu werden mittels des Sensors Abstandsbilder des Erfassungsbereichs erfasst, die jeweils eine Menge von Abstandsbildpunkten, die bei einer Abtastung des Erfassungsbereichs erhalten wurden, umfassen. Ein Abstandsbildpunkt kann dabei insbesondere Daten in Bezug auf die relative Lage eines von dem Sensor erfassten Punktes oder Bereichs auf einem Gegenstand zu dem Sensor enthalten, aus denen insbesondere der Abstand des jeweiligen Punktes bzw. Bereichs von dem Sensor ermittelbar ist. Den realen Gegenständen entsprechen dabei bei dem Objektverfolgungsverfahren unter Verwendung von Abstandsbildpunkten bzw. in den Abstandsbildern definierte Objekte. Diese Objekte und deren Lage werden mittels des Verfahrens ermittelt und geben idealerweise die Lage der entsprechenden Gegenstände wieder.

Solche Verfahren können insbesondere im Straßenverkehr eingesetzt werden, um einen Überwachungsbereich vor einem Kraftfahrzeug zu überwachen und in diesem Überwachungsbereich auftretende Gegenstände, zu denen der Einfachheit halber im Rahmen der vorliegenden Erfindung auch Fußgänger gezählt werden, zu erkennen und verfolgen.

Dabei können entsprechend der Verkehrssituation zum einen sich schnell und insbesondere sich nicht geradlinig bewegende Gegenstände bzw. diesen entsprechende Objekte und nahe beieinander liegende bzw. sich teilweise aus Sicht des Sensors verdeckende Gegenstände bzw. diesen entsprechende Objekte auftreten. In beiden Fällen kann es sich als schwierig erweisen, Abstandsbildpunkte eines aktuellen Abstandsbildes einem zuvor schon erkannten Objekt zuverlässig zuzuordnen, was die Erkennung bzw. Verfolgung der Objekte erschwert und die Genauigkeit der Bestimmung der Lage und insbesondere auch Geschwindigkeit der Objekte und damit der diesen entsprechenden Gegenstände reduziert.

Dies reduziert die Zuverlässigkeit der Objektverfolgung.

EP 1 094 336 A2 beschreibt ein Verfahren zur Erkennung von Objekten, insbesondere von vorausfahrenden Fahrzeugen, mittels Radar. Handelt es sich bei dem vorausfahrenden Fahrzeug um einen Pkw mit Stufenheck, wird ein Auswertesignal mit zwei Peaks erhalten. Handelt es sich bei dem vorausfahrenden Fahrzeug hingegen um einen Lkw, wird ein Signal mit lediglich einem Peak erhalten. Durch die Signalform kann zwischen verschiedenen Fahrzeugtypen unterschieden werden. Das Auswertesignal entspricht dabei der Frequenzdifferenz Δf zwischen der Frequenz einer von einer Antenne mit steigender Frequenz ausgesandten Strahlung und der Frequenz der an den Objekten reflektierten Strahlung, die entsprechend der Länge ihres Laufweges der jeweils aktuellen Frequenz der ausgesandten Strahlung hinterherläuft.

US 2001/0052844 A1 beschreibt ein Verfahren zur Erkennung von Objekten, insbesondere von vorausfahrenden Fahrzeugen. Ein Laserradarsensor und ein Mikrocomputer erzeugen Messdaten, die jeweils den Winkel eines Objekts, den Abstand zu dem Objekt und die Echopulsbreite umfassen. Die Echopulsbreiten werden dazu verwendet, reflektierte Strahlung in einen "gestreuten" und einen "ungestreuten" Anteil zu trennen, wobei der gestreute Anteil dadurch entsteht, dass der Laserstrahl auf eine linsenähnliche Wasserausbildung auf der Glasplatte des Laserradarsensors trifft.

Der vorliegenden Erfindung liegt die Aufgabe zugrunde, ein Verfahren der oben genannten Art bereitzustellen, das eine zuverlässige Verfolgung von Objekten, insbesondere auch von Fahrzeugen im Straßenverkehr entsprechenden Objekten, erlaubt.

Die Aufgabe wird gelöst durch ein Verfahren der oben genannten Art mit den Merkmalen des Anspruchs 1.

Bei dem erfindungsgemäßen Verfahren zur Verfolgung von Objekten, die Gegenständen im Erfassungsbereich eines Sensors für elektromagnetische Strahlung, insbesondere eines Laserscanners, entsprechen, auf der Basis von in zeitlicher Folge von dem Sensor erfassten Abstandsbildern des Erfassungsbereichs mit Abstandsbildpunkten, die jeweils durch Aussendung eines Pulses elektromagnetischer Strahlung und Detektion des von einem Punkt oder Bereich auf einen Gegenstand als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist, wird in aufeinander folgenden Zyklen jeweils in einem aktuellen Zyklus in einem aktuellen Abstandsbild nach Abstandsbildpunkten gesucht, die einem aus einem vorhergehenden Zyklus bekannten Objekt entsprechen, und es wird aus dem Objekt zugeordneten Abstandsbildpunkten des aktuellen Abstandsbildes eine aktuelle Lage des Objekts ermittelt, wobei den Abstandsbildpunkten jeweils zugeordnete Parameterwerte der Echopulseigenschaft verwendet werden.

Unter einem Abstandsbild eines Sensors zur Erfassung elektromagnetischer Strahlung, das häufig auch als tiefenaufgelöstes Bild oder Entfernungsbild bezeichnet wird, wird eine Menge von bei einer Abtastung des Erfassungsbereichs des Sensors erfassten Abstandsbildpunkten verstanden, denen Punkte bzw., je nach Auflösung des Sensors, auch Bereiche eines von dem Sensor erfassten Gegenstands bzw. der Oberfläche des Gegenstands entsprechen. Die Abstandsbildpunkte, die im Folgenden der Einfachheit halber auch als Bildpunkte bezeichnet werden, umfassen dabei wenigstens der Lage der zugehörigen Gegenstandspunkte bzw. -bereiche entsprechende Koordinaten zur Definition einer Lage dieser Gegenstandspunkte bzw. -bereiche beispielsweise relativ zu dem Sensor wenigstens in einer Fläche, vorzugsweise einer Ebene, die nicht orthogonal zu einer Blickrichtung des Sensors orientiert ist. Aus den Koordinaten kann insbesondere der Abstand der Gegenstandspunkte bzw. -bereiche von dem Sensor ermittelbar sein. Regionen des Erfassungsbereichs, in denen keine Gegenstände vorhanden sind, können, je nach Sensor, trotzdem Abstandsbildpunkte zugeordnet sein, die dann entsprechend gekennzeichnet sein können.

Die Sensoren für elektromagnetische Strahlung zur Erfassung solcher Abstandsbilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind.

Für das erfindungsgemäße Verfahren werden insbesondere Abstandsbilder verwendet, bei denen zur Erfassung von Abstandsbildpunkten Pulse elektromagnetischer Strahlung ausgesendet werden, die gegebenenfalls durch einen Punkt oder Bereich auf einem Gegenstand wenigstens teilweise als Echopuls zurückgeworfen und durch den Sensor detektiert werden. Aus der Laufzeit der Pulse von dem Sensor zu dem Punkt oder dem Bereich auf dem Gegenstand und zurück zu dem Sensor kann dann der Abstand des Punktes oder Bereichs von dem Sensor ermittelt werden.

Vorzugsweise wird daher als Sensor ein Laserscanner verwendet, der bei einer Abtastung den Erfassungsbereich mit mindestens einem gepulsten Strahlungsbündel abtastet, das einen vorgegebenen Winkelbereich, vorzugsweise mit einer Schwenkbewegung, überstreicht, und von einem Punkt bzw. Bereich eines Gegenstands zurückgeworfene Strahlungspulse des Strahlungsbündels detektiert. Die für einen Abstandsbildpunkt erfassten Abtastdaten können dann als Koordinaten den Winkel, bei dem der Echopuls erfasst wurde, und die aus der Laufzeit des Pulses bzw. Echopulses bestimmte Entfernung des Gegenstandspunktes bzw. -bereichs von dem Laserscanner erhalten. Bei der elektromagnetischen Strahlung kann es sich insbesondere um sichtbares oder infrarotes Licht handeln.

Bei dem erfindungsgemäßen Verfahren wird davon ausgegangen, dass die Energie der ausgesandten Pulse jeweils fest vorgegeben oder, beispielsweise durch Erfassung eines Parameters, der von der Pulsintensität oder vorzugsweise Pulsenergie abhängt, bekannt ist. Die Echopulse weisen dann eine Echopulsenergie auf, die zum einen von den Eigenschaften des von dem Sensor abgegebenen Pulses, insbesondere dessen Form und Energie, und zum anderen beispielsweise von der Größe des Bereichs auf dem Gegenstand, von dem der Puls zurückgeworfen wird, der Neigung des Bereichs gegenüber der Ausbreitungsrichtung des Pulses und den optischen Eigenschaften der Oberfläche des Bereichs, insbesondere dessen Remissionseigenschaften, abhängt. Um zusätzliche Informationen über Gegenstände bzw. Bereiche auf Gegenständen zu erhalten, werden daher bei dem erfindungsgemäßen Verfahren Abstandsbilder verwendet, bei denen den Abstandsbildpunkten jeweils wenigstens ein Wert für einen Parameter für eine Echopulseigenschaft zugeordnet ist, die von der Energie des Echopulses abhängt. Die Echopulseigenschaft braucht dabei nicht unbedingt ausschließlich von der Energie des Echopulses abzuhängen. Da der Echopuls räumlich gesehen einen Querschnitt aufweisen kann, der größer ist als ein Empfangselement des Sensors und zusätzlich in Abhängigkeit von den Eigenschaften des Gegenstandspunktes variieren kann, wird im Rahmen der Erfindung unter der Echopulsenergie jeweils die von dem Sensor empfangbare Energie des Echopulses verstanden, die bedingt durch die verglichen mit dem Strahlquerschnitt des Echopulses oft kleine Fläche des Empfangselements gegenüber der tatsächlichen, über den gesamten Strahlquerschnitt des Echopulses integrierten Energiedichte reduziert sein kann.

Die bei dem erfindungsgemäßen Verfahren verwendeten Abstandsbilder werden von dem Sensor in zeitlicher, vorzugsweise zeitlich äquidistanter Folge erfasst, wobei die Abstandsbildpunkte innerhalb eines einzelnen Abstandsbildes nicht unbedingt nacheinander erfasst zu werden brauchen. Bei der Umsetzung der bei der Abtastung erhaltenen Abtastdaten in Abstandsbildpunkte können Korrekturen, zum Beispiel in Bezug auf die Bewegung des Sensors, vorgenommen werden, jedoch ist dies nicht notwendig.

Das erfindungsgemäße Verfahren wird zyklisch durchgeführt, wobei vorzugsweise für jeden Zyklus ein neues, aktuelles Abstandsbild des Sensors in eine zur Durchführung des Verfahrens geeignete Einrichtung eingelesen bzw. zur Durchführung des Verfahrens bereitgestellt wird.

Erfindungsgemäß wird in einem aktuellen Zyklus in einem aktuellen Abstandsbild nach Abstandsbildpunkten gesucht, die einem aus einem vorhergehenden Zyklus bekannten Objekt entsprechen. Werden solche Abstandsbildpunkte gefunden, können diese dem Objekt in dem aktuellen Zyklus zugeordnet werden, so dass aus diesen dem Objekt zugeordneten Abstandsbildpunkten des aktuellen Abstandsbildes eine aktuelle Lage des Objekts ermittelt werden kann. Aus Abstandsbildpunkten, die keinem aus einem vorhergehenden Zyklus bekannten Objekt zugeordnet werden können, können gegebenenfalls neue Objekte gebildet werden.

Erfindungsgemäß werden bei der Objektverfolgung, das heißt insbesondere bei der Suche und/oder der Ermittlung der Lage von Objekten in dem aktuellen Zyklus, die den Abstandsbildpunkten jeweils zugeordneten Parameterwerte der Echopulseigenschaft verwendet.

Durch die zusätzliche Information kann eine Zuordnung von Abstandsbildpunkten des aktuellen Abstandsbildes zu Objekten zuverlässiger und gegebenenfalls auch schneller erfolgen als bei konventionellen Verfahren, so dass insgesamt die Objektverfolgung zuverlässiger wird.

Insbesondere bei der Verfolgung von Objekten, die Gegenständen mit gut reflektierenden Flächen entsprechen, können sich so überraschend deutliche Verbesserungen in der Zuverlässigkeit der Objektverfolgung ergeben. Dies gilt insbesondere für an Straßenfahrzeugen vorhandene Reflektoren, beispielsweise Rückstrahler, insbesondere in Heckleuchten, oder das Kraftfahrzeugkennzeichen. Diese weisen in der Regel im Vergleich zu anderen Oberflächenbereichen auf einem Fahrzeug wesentlich größere Reflektivitäten auf und können insbesondere als Retroreflektoren ausgebildet sein.

Aber auch andere Gegenstände im Bereich der Straße tragen Reflektoren, beispielsweise Leitpfosten zur Begrenzung von Fahrbahnen, oder sind insgesamt als Reflektoren ausgebildet, wie dies häufig bei Verkehrsschildern der Fall ist.

Da viele dieser Reflektoren eine extrem hohe Reflektivität aufweisen, können diese auch bei nur kleinen Flächen im Vergleich zur Querschnittsfläche des gepulsten Strahlungsbündels Echopulse mit Energien zurückwerfen, die wesentlich größer sind, als die von anderen Bereichen auf Gegenständen zurückgeworfenen Echopulse. Diese Eigenschaft äußert sich dann in entsprechenden Werten des Parameters für die Echopulseigenschaft, die sich ebenfalls von denen für die anderen Bereiche auf den Gegenständen unterscheiden.

Diese Reflektoren können daher besonders gut zur Erkennung der entsprechenden Gegenstände verwendet werden.

Weiterbildungen und bevorzugte Ausführungsformen der Erfindung sind in den Ansprüchen, der Beschreibung und den Zeichnungen beschrieben.

Für das erfindungsgemäße Verfahren ist es besonders vorteilhaft, wenn die von dem Sensor erfasste Energie der empfangenen Echopulse tatsächlich die Eigenschaften des Punktes bzw. Bereichs auf einem Gegenstand wiedergibt, von dem der Echopuls zurückgeworfen wurde. In sehr vielen Fällen wird ein Empfangselement des Sensors, das den Echopuls erfasst, sich nicht über die gesamte Querschnittsfläche des Echopulses bzw. des entsprechenden Strahlenbündels erstrecken, so dass es nicht die Gesamtenergie des Echopulses empfängt. Vielmehr wird es dann nur das Produkt aus der Echopulsintensität und der Fläche des Empfangselements empfangen, das jedoch in guter Näherung proportional zu der Echopulsgesamtenergie ist. Die Intensität des Echopulses ändert sich jedoch bei einem nicht perfekt parallelen Echopulsstrahlungsbündel mit der Entfernung. Es ist daher bevorzugt, dass die den Abstandsbildpunkten zugeordneten Parameterwerte für die Echopulseigenschaft in Bezug auf den durch den jeweiligen Abstandsbildpunkt gegebenen Abstand von dem Sensor korrigiert werden. Insbesondere können hierzu die Parameterwerte mit dem Quadrat der Abstandswerte in den Abstandsbildpunkten, denen die Parameterwerte jeweils zugeordnet sind, multipliziert werden. Die sich auf diese Weise ergebenden Parameterwerte geben in guter Näherung die Gesamtenergie der Echopulse wieder. Auf diese Weise ergeben sich auch für Abstandsbildpunkte in stark unterschiedlichen Entfernungen miteinander vergleichbare Parameterwerte, was die Verwendung dieser Parameterwerte bei der Objektverfolgung wesentlich vereinfacht.

Grundsätzlich können als Echopulseigenschaft beliebige Eigenschaften des Echopulses verwendet werden, die von der Energie des Echopulses abhängen. Bei einer Ausführungsform des erfindungsgemäßen Verfahrens ist es bevorzugt, dass als Echopulseigenschaft eine Breite des jeweiligen Echopulses oder eines entsprechenden Signalpulses eines den Echopuls empfangenden Empfangselements bei einem vorgegebenen Pegel verwendet wird. Unter der Breite des Echopulses wird dabei der Abstand von zwei Zeitpunkten verstanden, zu denen die Intensität des Echopulses bzw. die mit der Fläche des jeweiligen Empfangselements des Sensors multiplizierten Intensität des Echopulses bzw. ein entsprechendes Signal des Empfangselements einen vorgegebenen Pegel zuerst überschreitet bzw. wieder unterschreitet. Da der Pegel absolut vorgegeben ist und die Flanken von Echopulsen eine nur endliche Steigung aufweisen, hängt die Breite des Echopulses bei vorgegebenen, von dem Sensor abgegebenen Pulsen unmittelbar mit der Energie des Echopulses zusammen. Der vorgegebene Pegel ist dabei vorzugsweise möglichst klein, aber doch so groß gewählt, dass Rauschen unterdrückt und nicht als Echopuls erkannt wird. Die Verwendung dieser Echopulseigenschaft ist besonders vorteilhaft, da zumindest bei der Verwendung von Laserscannern häufig das Überschreiten und/oder Unterschreiten des vorgegebenen Pegels zur Messung der Laufzeit eines Pulses verwendet wird und damit die Ermittlung der Echopulsbreite apparativ sehr einfach erfolgen kann.

Alternativ oder zusätzlich ist es bevorzugt, dass als Echopulseigenschaft eine Pulsfläche des jeweiligen Echopulses verwendet wird. Dabei wird bei Echopulsen, deren Strahlquerschnitt größer als die Fläche eines Empfangselements des Sensors ist, unter der Pulsfläche des jeweiligen Echopulses insbesondere die über die Dauer des Pulses integrierte Echopulsintensität multipliziert mit einer Fläche des Empfangselements bzw. das entsprechend integrierte Signal des Empfangselements verstanden. Auch diese Echopulseigenschaft ist besonders einfach apparativ durch entsprechende Integrationsschaltungen erhältlich.

Als weitere Alternative ist es bevorzugt, dass als Echopulseigenschaft eine Pulshöhe des jeweiligen Echopulses verwendet wird. Die Pulshöhe entspricht bei Echopulsen, deren Strahlquerschnitt größer als die Fläche eines Empfangselements des Sensors ist, der maximalen Intensität des Echopulses multipliziert mit der Fläche des Empfangselements bzw. dem Maximum des Betrags des Pegels des entsprechenden Signals des Empfangselements. Auch diese Echopulseigenschaft kann durch einfache apparative Vorkehrungen in dem Sensor leicht erfasst werden.

Als weitere Alternative kann auch die Steilheit der Pulsflanken als Echopulseigenschaft verwendet werden, da davon auszugehen ist, dass diese bei konstanter Form in guter Näherung die Echopulsenergie wiedergeben.

Es ist auch denkbar, Kombinationen der Eigenschaften zu verwenden.

Die den Abstandsbildpunkten jeweils zugeordneten Parameterwerte der Echopulseigenschaft können bei der Objektverfolgung weiterhin auf verschiedene Art und Weise verwendet werden. Es ist dabei bevorzugt, dass Parameterwerte nicht zur Bildung von Segmenten verwendet werden, d.h. dass zur Segmentierung nicht ein Segmentierungskriterium verwendet wird, das die Parameterwerte der Echopulseigenschaft betrifft.

Bei einer Ausführungsform des erfindungsgemäßen Verfahrens ist es bevorzugt, dass von einem Abstandsbild nur solche Abstandsbildpunkte verwendet werden, denen Parameterwerte zugeordnet sind, die Echopulsenergien entsprechen, die eine vorgegebene Mindestechopulsenergie überschreiten. Je nach Definition der Parameterwerte kann dies bedeuten, dass diese entsprechende vorgegebene Schwellwerte über- bzw. unterschreiten. Weiterhin können die Parameterwerte auch, wie zuvor beschrieben, vorzugsweise korrigiert sein. Insbesondere bei Verwendung der Echopulsbreite, der Echopulsfläche oder auch der Echopulshöhe als Echopulseigenschaft können dann beispielsweise nur solche Abstandsbildpunkte verwendet werden, deren zugeordnete Parameterwerte einen vorgegebenen, der vorgegebenen Mindestechopulsenergie entsprechenden Mindestwert überschreiten. Die Mindestechopulsenergie wird dabei vorzugsweise so gewählt, dass in dem resultierenden Abstandsbild alle Abstandsbildpunkte enthalten sind, die erfassten Gegenstandsbereichen mit Reflektoren für die von dem Sensor verwendete elektromagnetische Strahlung entsprechen, während Abstandsbildpunkte nicht verwendet werden, die Bereichen entsprechen, die von dem Sensor verwendete elektromagnetische Strahlung nur geschwächt und diffus oder wenig gerichtet zurückwerfen. Das entstehende Abstandsbild kann dann mit bekannten Objektverfolgungsverfahren weiter verarbeitet werden, bei denen insbesondere das entstandene Abstandsbild einer Segmentierung unterworfen wird, bei der Abstandsbildpunkte gemäß eines Segmentierungskriteriums in Bezug auf den Höchstabstand von Abstandsbildpunkten voneinander Segmenten zugeordnet werden. Auf diese Weise kann die Anzahl von Abstandsbildpunkten, die bei der Segmentierung und der weiteren Objektverfolgung zu verarbeiten ist, wesentlich reduziert werden, was die Ausführungsgeschwindigkeit des erfindungsgemäßen Verfahrens wesentlich erhöhen kann. Ein solches Vorgehen ist insbesondere in solchen Situationen vorteilhaft, in denen davon ausgegangen werden kann, dass alle im Erfassungsbereich auftretenden, im Rahmen der Objektverfolgung zu verfolgenden Gegenstände wenigstens einen reflektierenden Bereich aufweisen. Dies ist beispielsweise auf Autobahnen der Fall, auf denen nur Kraftfahrzeuge und Fahrbahnbegrenzungen mit Reflektoren auftreten sollten.

Wenigstens einem Objekt wird ein durch eine Variation der Parameterwerte für die Echopulseigenschaft gegebenes Merkmal zugeordnet. Wenigstens einem Objekt kann ein durch eine Größe der Parameterwerte für die Echopulseigenschaft gegebenes Merkmal zugeordnet werden. Das Merkmal wird zur Erkennung und/oder Verfolgung des Objekts verwendet.

Darunter, dass das Merkmal durch die Größe des Parameterwertes für die Echopulseigenschaft gegeben ist, kann insbesondere verstanden werden, dass, je nach Definition des Parameters, der Parameter einen vorgegebenen Schwellwert über- bzw. unterschreitet oder innerhalb eines vorgegebenen Intervalls liegt. Ist der Parameter für die Echopulseigenschaft eine monotone Funktion der Echopulsenergie, ist der Schwellwert für die Parameterwerte vorzugsweise so gewählt, dass die Echopulsenergien eine vorgegebene Mindestechopulsenergie überschreiten, die charakteristisch für das Vorhandensein von Reflektoren oder auch für bestimmte Typen von Reflektoren in den zu erwartenden Anwendungssituationen ist. Beispielsweise können Verkehrsschilder, die mit retroreflektierenden Schichten ausgestattet sind, extrem hohe empfangene Echopulsenergien ergeben, so dass sich durch Wahl eines entsprechenden Schwellwerts beispielsweise das Verkehrszeichen von anderen Reflektoren, beispielsweise Rückstrahlern in Heckleuchten von Fahrzeugen, unterscheiden lassen.

Das Merkmal kann aber auch durch eine Variation der Parameterwerte für die Echopulseigenschaft zwischen verschiedenen entsprechenden Abstandsbildpunkten gegeben sein. Dem Merkmal kann dann insbesondere eine Lage zugeordnet werden, die durch die Lagen der entsprechenden Abstandsbildpunkte oder einen aus diesen ermittelbaren Bezugspunkt gegeben sein kann. Unter einer Variation wird insbesondere auch verstanden, dass auf einem Gegenstand bzw. in einem Objekt beispielsweise wenigstens ein Bereich auftritt, der sich von umliegenden Bereichen durch einen stark veränderten Parameterwert für die Echopulseigenschaft, beispielsweise gegeben durch ein Über- oder Unterschreiten eines Schwellwerts, unterscheidet. Ein Beispiel hierfür ist ein Kraftfahrzeugkennzeichen an einem Automobil. Es genügt insofern bereits das Auftreten eines solchen Bereichs unabhängig von der Lage in dem Objekt, vorzugsweise wird jedoch die Lage in dem Objekt mit verwendet.

Das Merkmal ist durch einen Referenzverlauf des Parameters für die Echopulseigenschaft entlang wenigstens eines Abschnitts einer entlang aufeinander folgender, unter aufsteigenden Winkeln erhaltener Abstandsbildpunkte verlaufenden; Kontur des Objekts gegeben. Insbesondere bei Objekten, die Gegenständen mit einem näherungsweise rechteckigen Umriss in einer Ebene parallel zu der Standfläche der Gegenstände entsprechen, kann der Konturabschnitt durch eine der Seiten der dann geradlinigen oder aus zueinander gewinkelten Geradenstücken bzw. Strecken bestehenden Kontur gegeben sein. So zeichnen sich beispielsweise zweispurige Kraftfahrzeuge, das heißt Personenkraftwagen oder Lastkraftwagen sowie Busse, dadurch aus, dass zwischen zwei Heckleuchten mit Rückstrahlern ein ebenfalls stark reflektierendes Kraftfahrzeugkennzeichen angeordnet ist. Es kann sich dann beispielsweise bei Verwendung von Parametern für die Echopulseigenschaft, die monoton von der empfangenen Echopulsenergie abhängen, ein Parameterverlauf ergeben, bei dem über einen Konturabschnitt, der dem Heck des Kraftfahrzeugs entspricht, zunächst hohe Werte des Parameters für den Rückstrahler der einen Heckleuchte ermittelt werden, die entlang der Heckkontur dann zunächst auf nicht stark reflektierenden Oberflächen entsprechende, normale Werte abfallen, um dann im Bereich des Kraftfahrzeugkennzeichens wieder anzusteigen, danach wieder auf normale Werte abzufallen und schließlich wieder im Bereich des Rückstrahlers der anderen Heckleuchte anzusteigen. Solche Merkmale sind sehr charakteristisch für bestimmte Gegenstände, so dass anhand dieser Merkmale ansonsten in den Abstandsbildern gleich aussehende Objekte einfach unterschieden werden können.

Der Referenzverlauf kann nur durch die Abfolge von Maxima und Minima der Parameterwerte gegeben sein, wobei ein Maximum vorzugsweise nur als Maximum verwendet wird, wenn es einen Schwellwert überschreitet, der in Abhängigkeit von dem zu erwartenden Rauschen des Verlaufs zur Unterdrückung desselben gewählt sein kann. Vorzugsweise ist der Referenzverlauf jedoch wenigstens näherungsweise quantitativ in Bezug auf den Konturabschnitt vorgegeben. Dies kann beispielsweise durch Angabe eines diskreten Feldes von Werten entlang der Kontur oder durch Vorgabe einer entsprechenden Funktion geschehen.

Der Verlauf für einen Parameter für die Echopulseigenschaft, der monoton von der Echopulsenergie abhängt, kann dann mehrere Peaks vorgegebener Mindesthöhe aufweisen und als Ganzer als ein Referenzverlauf für ein einzelnes Merkmal behandelt werden. Der gleiche Verlauf kann jedoch auch in Teilverläufe mit jeweils nur einem Peak zerlegt werden, so dass eine entsprechende Anzahl von durch die jeweiligen Peaks und die zugehörigen Teile des Konturabschnitts gegebenen Merkmalen entsteht.

In gegebenen Abstandsbildern kann nach den Merkmalen mit verschiedenen Verfahren gesucht werden. So ist es gemäß einer Alternative bevorzugt, dass zur Suche nach dem gegebenen Merkmal eine mittlere, insbesondere quadratische, Abweichung zwischen dem Referenzverlauf des Parameters für die Echopulseigenschaft und einem durch gewählte aktuelle Abstandsbildpunkte und diesen zugeordnete Parameterwerte für die Echopulseigenschaft gegebenen aktuellen Verlauf des Parameters für die Echopulseigenschaft verwendet wird, wobei der Referenzverlauf gegebenenfalls relativ zu dem durch die gewählten aktuellen Abstandsbildpunkte gegebenen Verlauf um eine vorgegebene Distanz verschoben sein kann. Ist die relative Lage des Konturabschnitts für den Referenzverlauf und des potentiellen durch die gewählten aktuellen Abstandsbildpunkte bestimmten Konturabschnitts für den aktuellen Verlauf nicht bekannt, kann durch Variation der Distanz der Referenzverlauf vorzugsweise so verschoben werden, dass die resultierende mittlere Abweichung minimiert wird. Die Größe der Abweichung ist dabei ein Maß für die Übereinstimmung des Referenzverlaufs mit dem aktuellen Verlauf. Bei den ausgewählten Abstandsbildpunkten kann es sich insbesondere um solche Abstandsbildpunkte handeln, die für eine Zuordnung zu dem entsprechenden Objekt in Betracht kommen. Bei Durchführung einer Segmentierung können diese durch entsprechende Segmente gegeben sein. Es ist jedoch auch möglich, dem in dem aktuellen Bild nach Konturabschnitten zu suchen, die dem zur Definition des Referenzverlaufs verwendeten Konturabschnitt in geometrischer Hinsicht ähneln und vorzugsweise aufgrund ihrer Lage zur Zuordnung zu dem Objekt in Betracht kommen, und die entsprechenden Abstandsbildpunkte auszuwählen.

Um eine größere Aussagekraft zu erhalten, ist es bevorzugt, dass zur Suche nach dem gegebenen Merkmal eine Kreuzkorrelation zwischen dem Referenzverlauf des Parameters für die Echopulseigenschaft und einem durch gewählte aktuelle Abstandsbildpunkte und diesen zugeordnete Parameterwerte für die Echopulseigenschaft gegebenen aktuellen Verlauf des Parameters der Echopulseigenschaft verwendet wird. Ist die Lage des Konturabschnitts für den Referenzverlauf und des durch die ausgewählte aktuelle Abstandsbildpunkte definierten Konturabschnitts für den aktuellen Verlauf nicht bekannt, kann dabei insbesondere die Kreuzkorrelation als Funktion einer Verschiebung zwischen dem Referenzverlauf und dem aktuellen Verlauf ermittelt werden, wobei die Funktionswerte gegebenenfalls nur für wenige Verschiebungswerte ermittelt zu werden brauchen. Maxima der Funktion können dann auf eine Übereinstimmung der Verläufe hindeuten. Bei den ausgewählten Abstandsbildpunkten kann es sich insbesondere um solche Abstandsbildpunkte handeln, die für eine Zuordnung zu dem entsprechenden Objekt in Betracht kommen. Bei Durchführung einer Segmentierung können diese durch entsprechende Segmente gegeben sein. Es ist jedoch auch möglich, in dem aktuellen Bild nach Konturabschnitten zu suchen, die dem zur Definition des Referenzverlaufs verwendeten Konturabschnitt in geometrischer Hinsicht ähneln und vorzugsweise aufgrund ihrer Lage zur Zuordnung zu dem Objekt in Betracht kommen, und die entsprechenden Abstandsbildpunkte auszuwählen. Hierdurch können insbesondere auch auf einfache Weise nur teilweise in den Abstandsbildern sichtbare Anteile von Merkmalen wieder aufgefunden werden, wobei die Größe der entsprechenden Kreuzkorrelation als ein Maß für die Güte der Übereinstimmung verwendet werden kann.

Der Referenzverlauf des Parameters für die Echopulseigenschaft kann dabei für ein Objekt nach dessen erster Erkennung in dem Verfahren fest vorgegeben sein. Dies ist insbesondere dann vorteilhaft, wenn davon auszugehen ist, dass Objekte zumindest bei ihrer ersten Erkennung im Bereich der Merkmale nicht verdeckt sind. Bei einer Bewegung der Objekte, beispielsweise bei einem Richtungswechsel eines Fahrzeugs oder bei einer anfänglichen teilweisen Verdeckung kann sich jedoch der vorteilhaft zu verwendende Referenzverlauf verändern, wenn Teile des verwendeten Konturabschnitts nicht mehr verdeckt werden. Weiterhin kann sich die Ausdehnung des Konturabschnitts im Abstandsbild und damit die Auflösung der Änderung der Parameterwerte des Verlaufs ändern, wenn sich der Abstand zwischen dem Gegenstand und dem Sensor ändert. Es ist daher bevorzugt, dass der Referenzverlauf für das Merkmal in einem aktuellen Zyklus aktualisiert wird. Dies bedeutet, dass zur Erkennung von Merkmalen jeweils entsprechende Verläufe eines aktuellen Zyklus und eines vorhergehenden Zyklus durch Verwendung eines entsprechenden Kriteriums, beispielsweise der mittleren quadratischen Abweichung oder der Kreuzkorrelation, miteinander verglichen werden.

Die Merkmale können auf unterschiedliche Art und Weise bei einer Objektverfolgung verwendet werden.

So ist es bei einer Weiterbildung des erfindungsgemäßen Verfahrens bevorzugt, dass das aktuelle Abstandsbild unter Bildung von Segmenten segmentiert wird, und dass bei der Zuordnung von Segmenten zu dem Objekt das Merkmal in denjenigen Abstandsbildpunkten und den zugeordneten Parameterwerten gesucht wird, die durch Segmente gegeben sind, die für eine Zuordnung zu dem Objekt in Betracht kommen. Dabei kann die Segmentierung des Abstandsbildes insbesondere allein auf der Basis der Lagedaten in dem Abstandsbild erfolgen. Das bedeutet, dass das entsprechende, zur Segmentierung verwendete Segmentierungskriterium beispielsweise nur die Relativlagen von zwei einem Segment zuzuordnenden Abstandsbildpunkten zu betreffen braucht. Insbesondere kann beispielsweise ein Abstandskriterium verwendet werden, das bei bekannten Segmentierungsverfahren für Abstandsbilder verwendet wird. Bei der Suche des Merkmals können insbesondere die oben beschriebenen Verfahren verwendet werden, soweit das Merkmal durch Referenzverläufe des Parameters für die Echopulseigenschaft gegeben ist. Als Segmente, die zur Zuordnung zu dem Objekt in Betracht kommen, können zum einen alle Segmente des Abstandsbildes gewählt werden. Es kann dann zunächst eine Vorauswahl auf der Basis des Merkmals getroffen und erst dann eine Prüfung in Bezug auf die Lage des vorausgewählten Segments relativ zu Lage des Objekts in einem vorhergehenden Zyklus oder einer prädizierten Lage des Objekts in dem aktuellen Zyklus durchgeführt werden. Dies kann insbesondere dann von Vorteil sein, wenn zur Zuordnung nur Segmente in Betracht kommen, die wenigstens einen Bildpunkt aufweisen, bei dem als Merkmal wenigstens ein Abstandsbildpunkt einen ihm zugeordneten Parameterwert für die Echopulseigenschaft aufweist, der eine vorgegebene Größe hat. Vorzugsweise wird aber zunächst eine Vorauswahl der für eine Zuordnung zu dem Objekt in Betracht kommenden Segmente durchgeführt, bei der beispielsweise überprüft werden kann, ob Segmente innerhalb eines Suchbereichs um eine prädizierte Lage eines Bezugspunkts des Objekts in dem aktuellen Zyklus liegen. Unter diesen kann dann unter Berücksichtigung des Merkmals eine entsprechende Zuordnung erfolgen.

Insbesondere bei einer Teilverdeckung eines Objekts durch ein anderes zwischen dem Objekt und dem Sensor liegendes Objekt kann der Fall auftreten, dass Teile der entsprechenden Kontur nicht sichtbar sind. Dies kann die Zuordnung von Segmenten zu dem teilverdeckten Objekt erheblich erschweren. Auch in diesem Fall ist die Verwendung des Merkmals zur Zuordnung des Segments sehr vorteilhaft. Bei einer Teilverdeckung tritt jedoch noch das weitere Problem auf, dass selbst bei einer korrekten Zuordnung der Segmente zu den Objekten beispielsweise bei einem geradlinigen Segment, das nur den für den Sensor erfassbaren Teil einer Seite eines Objekts wiedergibt, allein aufgrund der Abstandsbildpunkte nicht entschieden werden kann, ob sich der verdeckte Teil der Seite an den einen oder den anderen Endpunkt des Segment anschließt. Hierdurch ergibt sich eine erhebliche Unsicherheit in der Bestimmung der Lage des Objekts insbesondere dann, wenn dieses nur durch ein einzelnes geradliniges Segment in dem Abstandsbild gegeben ist. Es ist daher bevorzugt, dass, insbesondere bei einer Teilverdeckung des Objekts durch ein anderes Objekt, das Merkmal zur Ermittlung der Lage des Objekts verwendet wird. Hierzu kann insbesondere bei Verwendung eines Merkmals, das durch einen Referenzverlauf des Parameters für die Echopulseigenschaft gegeben ist, durch Verwendung einer Kreuzkorrelation oder einer mittleren Abweichung zwischen dem Referenzverlauf und einem durch die Abstandsbildpunkte und die diesen zugeordneten Parameterwerte für die Echopulseigenschaft gegebenen Parameterverlauf für das Segment bzw. Objekt entschieden werden, ob einer der Endpunkte des Segments einer entsprechenden Ecke des dem Objekt entsprechenden Gegenstands entspricht, und, wenn dies der Fall ist, welcher Ecke. Auf diese Weise ergibt sich eine erhebliche Steigerung in der Genauigkeit der Ermittlung der Lage des Objekts und damit auch der über die Lagen ermittelten Geschwindigkeit des Objekts.

Bei den in den letzten Absätzen geschilderten Verwendungen des Merkmals können wesentliche Schritte der Objektverfolgung konventionell erfolgen. Das Objekt wird bei diesen Verfahren beispielsweise unter Verwendung eines Bezugspunkts des Objekts für die Lage und gegebenenfalls einer Bezugsachse für die Orientierung als Ganzes verfolgt. Insbesondere kann die Prädiktion der Lage des Objekts in einem folgenden Zyklus allein auf der Basis der dem Objekt zugeordneten Abstandsbildpunkte bzw. -segmente mit bekannten Verfahren, beispielsweise einem entsprechenden Kalman-Filter erfolgen, wobei das Objekt durch Zustandsvariablen in Bezug auf die Lage, die Geschwindigkeit und gegebenenfalls die Orientierung gegeben ist.

Um die Genauigkeit der Objektverfolgung zu erhöhen, ist es jedoch bevorzugt, dass für wenigstens ein Objekt aus den Abstandsbildern wenigstens ein weiteres Merkmal ermittelt wird, dass wenigstens nach einer Anfangsphase das Merkmal und das weitere Merkmal des Objekts wenigstens während solcher aufeinander folgender Zyklen, in denen die Merkmale jeweils erfassbar sind, insoweit getrennt voneinander verfolgt werden, als in einem aktuellen Zyklus zumindest die Prädiktion von Lagen und/oder Geschwindigkeiten der Merkmale und die Ermittlung von Schätzwerten für die Geschwindigkeiten der Merkmale bei gegebenen aktuellen Lagen der Merkmale getrennt voneinander durchgeführt werden, und dass auf der Basis der Ergebnisse der Verfolgung der Merkmale wenigstens eine Lage und/oder Geschwindigkeit des Objekts ermittelt wird. Bei dieser Weiterbildung wird ein Gegenstand bzw. ein entsprechendes Objekt also nicht, wie üblich, dadurch verfolgt, dass dieser bzw. das entsprechende Objekt anhand eines einzelnen Bezugspunkts und dessen Bewegung verfolgt wird. Vielmehr werden hierzu wenigstens zwei Merkmale verwendet, die wenigstens in zwei Phasen der Objektverfolgung getrennt voneinander verfolgt werden. Aus den Ergebnissen der Verfolgung der Merkmale werden dann die Lage und/oder Geschwindigkeit des Objekts ermittelt. Bei der Verfolgung werden Lagen der Merkmale prädiziert und dann aktuelle Lagen der Merkmale aus einem aktuellen Abstandsbild ermittelt. Auf der Basis dieser Ergebnisse kann dann wenigstens ein Schätzwert für eine Geschwindigkeit der Merkmale ermittelt werden.

Unter einer getrennten Verfolgung wird dabei verstanden, dass in der zur Prädiktion verwendeten Gleichung für den Zustandsvektor für ein Merkmal der Zustandsvektor oder Komponenten desselben für das andere Merkmal nicht explizit als Eingangsgröße auftreten. Gleiches gilt für die Ermittlung der Schätzwerte der Geschwindigkeiten der Merkmale in Beziehung auf die Abhängigkeit von den gegebenen aktuellen Lagen der Merkmale. Das bedeutet aber auch, dass in den Beziehungen auftretende Parameter unter Umständen durch beide Merkmale beeinflusst sind. Dies ist jedoch vorzugsweise nicht der Fall.

Bei der getrennten Verfolgung kann jedoch die Ermittlung der aktuellen Lagen der Merkmale auf der Basis eines aktuellen Abstandsbildes für beide Merkmale gemeinsam und in Abhängigkeit voneinander erfolgen.

Die getrennte Verfolgung braucht dabei nicht in dem Zyklus begonnen zu werden, in dem ein Objekt erstmals auftritt. Vielmehr genügt es, dass eine getrennte Verfolgung erst nach einem oder mehreren Zyklen, das heißt einer Anfangsphase, beginnt, in der beispielsweise ein konventionelles Objektverfolgungsverfahren verwendet werden kann. Die getrennte Verfolgung braucht weiterhin nur während derjenigen Zyklen zu erfolgen, während derer die Merkmale auch tatsächlich erfassbar sind.

Überraschenderweise kann so eine deutlich höhere Genauigkeit in der Ermittlung der Geschwindigkeiten der Objekte erzielt werden als bei konventionellen Verfahren. Dies ist wohl unter anderem darauf zurückzuführen, dass die Fehler bei der Einzelverfolgung der Merkmale nicht größer sind als die Fehler bei der gewöhnlichen Objektverfolgung. Bei der Ermittlung der Lagen und Geschwindigkeiten eines Objekts aus denen der Merkmale kann dann aber ein Ausgleichs- bzw. Mittelungseffekt auftreten, der den Gesamtfehler reduziert.

Diese Variante der Objektverfolgung braucht nicht auf alle Objekte im Erfassungsbereich des Sensors anwendbar zu sein. Vielmehr versteht es sich, dass sie nur auf Gegenstände angewendet wird, für die auch Merkmale aufgrund entsprechender Strukturen definierbar sind, was beispielsweise für Gegenstände mit strukturlosen Oberflächen nicht der Fall ist.

Bei dem weiteren Merkmal kann es sich insbesondere um ein durch eine Variation oder Größe von Parameterwerten der Echopulseigenschaft gegebenes Merkmal des Objekts, d.h. ein wie zuvor beschriebenes Merkmal in Bezug auf den Parameter für die Echopulseigenschaft handeln. Es ist jedoch bevorzugt, dass das weitere Merkmal einen charakteristischen Konturabschnitt eines Gegenstands in dem Erfassungsbereich betrifft. Der Konturabschnitt kann beispielsweise aufgrund seiner Länge, Lage und/oder Orientierung relativ zu anderen Konturabschnitten und/oder seiner Form für einen Gegenstand charakteristisch sein. Ein charakteristischer Konturabschnitt kann insbesondere durch eine Strecke, das heißt einen geradlinigen Abschnitt, der Kontur gegeben sein. Solche Konturabschnitte treten insbesondere bei Kraftfahrzeugen im Straßenverkehr regelmäßig auf, da Kraftfahrzeuge in der Regel näherungsweise einen rechteckigen Umriss in einer Ebene parallel zu einer Standfläche, auf der diese stehen, aufweisen. Ein Kraftfahrzeug bzw. ein diesem entsprechendes Objekt könnte dann beispielsweise durch Verfolgung eines Merkmals auf der Basis eines Verlaufs von Parameterwerten für die Echopulseigenschaft, beispielsweise für die Heckpartie mit Rückstrahlern aufweisenden Heckleuchten und einem Kraftfahrzeugkennzeichen, und eines weiteren Merkmals in Form eines geraden Konturabschnitts, beispielsweise für die Längsseite eines Kraftfahrzeugs, verfolgt werden. Hierdurch kann insbesondere gewährleistet werden, dass immer eindeutig entschieden werden kann, ob ein Geradenstück dem Heck eines Fahrzeugs entspricht oder die Längsseite oder einen Teil derselben wiedergibt.

In dem wichtigen Anwendungsfall der Überwachung eines Bereichs vor einem Kraftfahrzeug treten besonders häufig andere Kraftfahrzeuge als Gegenstände auf, die in einem Abstandsbild eines Sensors bzw. parallel zur Fahrbahn einen näherungsweise rechtwinkligen Umriss aufweisen. Dieser kann sich in den Abstandsbildern durch streckenartige und insbesondere winkelbzw. "L"-förmige Verteilungen der entsprechenden Abstandsbildpunkte äußern. Es ist daher bevorzugt, dass für einen Gegenstand, der in dem Erfassungsbereich eine näherungsweise rechteckige Kontur aufweist, als weitere Merkmale zwei im Wesentlichen zueinander orthogonale Seiten des Gegenstands verwendet werden.

Die aktuellen Lagen der Merkmale werden auf der Basis eines aktuellen Abstandsbildes ermittelt. Ist ein besonderes einfaches Verfahren gewünscht, ist es bevorzugt, dass die Ermittlungen der aktuellen Lagen wenigstens zweier Merkmale desselben Objekts bzw. Gegenstands aus einem aktuellen Abstandsbild in einem aktuellen Zyklus getrennt voneinander erfolgen.

Die Merkmale für einen Gegenstand bzw. ein Objekt sind nicht unabhängig voneinander, da ihre räumlichen Lagen relativ zueinander durch den Gegenstand vorgegeben sind. Um diese Abhängigkeit zu verwenden und damit eine höhere Genauigkeit zu erzielen, ist es bevorzugt, dass in einem vorhergehenden Zyklus für wenigstens zwei Merkmale desselben Objekts Lagen der Merkmale in einem aktuellen Zyklus prädiziert werden, dass aus den prädizierten Lagen der Merkmale des Objekts eine prädizierte Lage des Objekts ermittelt wird, dass dem Objekt auf der Basis der prädizierten Lage des Objekts Bildpunkte des aktuellen Abstandsbildes zugeordnet werden, und dass aktuelle Lagen der Merkmale in dem aktuellen Zyklus auf der Basis der dem Objekt zugeordneten Abstandsbildpunkte ermittelt werden. Bei dieser Ausführungsform erfolgt die Ermittlung der Merkmale bzw. der Lagen der Merkmale also nicht in unmittelbarer Abhängigkeit von deren prädizierten Lagen, sondern es wird zunächst eine Objektlage prädiziert, auf deren Basis nur eine Zuordnung von Bildpunkten zu dem Objekt erfolgt. Dabei kann vorzugsweise vor der Zuordnung eine Segmentierung des Abstandsbildes durchgeführt werden, bei der Abstandsbildpunkte zu Segmenten zusammengefasst werden. Die Zuordnung der Bildpunkte zu Objekten erfolgt dann durch eine Zuordnung von Segmenten zu Objekten. Wird eine Zuordnung von Abstandbildpunkten zu Objekten über Segmente durchgeführt, kann dazu, wie zuvor ausgeführt, ein Merkmal in Bezug auf Parameterwerte der Echopulseigenschaft verwendet werden. Dieses Vorgehen ermöglicht eine besonders einfache Zuordnung von Bildpunkten zu Objekten, aus denen dann die Merkmale ermittelt werden. In diesem Schritt, der auch als wenigstens indirekte "Messung" der Merkmale bzw. der Lagen der Merkmale aufgefasst werden kann, können daher Abhängigkeiten zwischen den Merkmalen eines Objekts bzw. Gegenstands bzw. deren Ermittlung auftreten und auch zur Ermittlung der Lagen der Merkmale verwendet werden.

Wenn eine Segmentierung des Abstandsbildes durchgeführt wird, kann der Fall auftreten, dass einem Objekt und insbesondere einem Merkmal des Objekts mehrere Segmente zuzuordnen sind. Um die Ermittlung der Merkmale des Objekts in dem aktuellen Zyklus zu vereinfachen, ist es bevorzugt, dass die Abstandsbilder segmentiert werden, und dass in dem Fall, dass mehrere Segmente einem Objekt zuzuordnen sind, die Segmente zu einem neuen Segment zusammengefasst werden. Es ist dann nur noch in diesem neuen Gesamtsegment nach den Merkmalen zu suchen. Da die Segmente Teile mehrerer Merkmale enthalten können, wird weiterhin die Ermittlung der Lagen der Merkmale wesentlich vereinfacht.

Insbesondere in dem Fall, dass die Abstandsbilder segmentiert werden, ist es daher besonders bevorzugt, dass geprüft wird, ob zwei Merkmale für ein Objekt in einem Segment enthalten sind, und dass für die unabhängige Verfolgung der Merkmale nur entsprechende Teile eines Segments verwendet werden. Dies ist insbesondere von Bedeutung für Merkmale, die charakteristische Konturabschnitte eines Gegenstands betreffen.

Werden zwei Merkmale für dasselbe Objekt verfolgt, stehen zwei geschätzte Geschwindigkeiten zur Ermittlung der Objektgeschwindigkeit zur Verfügung. Obwohl prinzipiell eine der geschätzten Geschwindigkeiten allein als Objektgeschwindigkeit angesehen werden könnte, ist es bevorzugt, dass die Geschwindigkeit eines Objekts als gewichteter Mittelwert der Geschwindigkeit der Merkmale für das Objekt ermittelt wird. Hierdurch findet ein Ausgleich von Fehlern in den geschätzten Geschwindigkeiten der Merkmale statt, der den Fehler in der geschätzten Geschwindigkeit des Objekts in der Regel herabsetzt.

Dabei ist es besonders bevorzugt, dass zur Verfolgung der Merkmale zunächst Lagen der Merkmale prädiziert werden, dass nach einer Ermittlung der Merkmale in einem aktuellen Abstandsbild in Abhängigkeit von den entsprechenden prädizierten Lagen eine aktuelle Lage des Merkmals ermittelt wird, und dass zur Ermittlung der Geschwindigkeit des Objekts die Geschwindigkeit desjenigen Merkmals, für das die Abweichungen zwischen der prädizierten Lage des Merkmals und der auf der Basis eines aktuellen Abstandsbildes ermittelten Lage des Merkmals kleiner ist als bei dem anderen Merkmal, stärker als die Geschwindigkeit des anderen Merkmals gewichtet wird. Die Lage des Merkmals kann dabei insbesondere durch einen Bezugspunkt und/oder eine Bezugsachse des Merkmals gegeben sein, der bzw. die beispielsweise in Abhängigkeit von den das Merkmal bildenden Abstandsbildpunkten ermittelbar sind. Insbesondere kann als Bezugspunkt beispielsweise der geometrische Schwerpunkt der entsprechenden Abstandsbildpunkte verwendet werden. Unter einer Ermittlung der Lage wird insbesondere auch eine Schätzung verstanden. Bei Verwendung eines Kalman-Filters zur Verfolgung der Merkmale kann als Abweichung insbesondere der Innovationsvektor verwendet werden, der unter anderem die Differenz zwischen den geschätzten und den ermittelten Lagen der Merkmale wiedergeben kann. Auf diese Weise kann eine besonders genaue Ermittlung der Geschwindigkeit des Objekts erfolgen, da die Geschwindigkeit desjenigen Merkmals besonders hoch gewichtet wird, dessen Bewegung bzw. Lage am besten vorhergesagt bzw. verfolgt wird.

Je nach Bewegung eines Objekts kann der Fall eintreten, dass von zwei Merkmalen nur noch eines in dem Abstandsbild erfassbar ist. Bei einer Varianten des erfindungsgemäßen Verfahrens ist es dann bevorzugt, dass in dem Fall, dass eines der Merkmale in einem aktuellen Zyklus nicht in dem aktuellen Abstandsbild erkennbar ist, auf der Basis der für den aktuellen Zyklus prädizierten Lage des Merkmals eine Lage des Merkmals für den nächsten Zyklus prädiziert wird. Dabei kann die für den aktuellen Zyklus prädizierte Lage des Merkmals zur Ermittlung der Lage des Objekts in dem aktuellen Zyklus herangezogen werden, vorzugsweise ist dies jedoch nicht der Fall. Das für den Sensor nicht sichtbare Merkmal könnte dann für mehrere Zyklen nur durch Prädiktion der Lagen verfolgt werden, bis es beispielsweise wieder aufgefunden wird oder der zu erwartende Fehler der Prädiktion zu groß wird.

Es ist jedoch bevorzugt, dass in dem Fall, dass ein erstes von mindestens zwei Merkmalen in einem aktuellen Zyklus nicht in dem aktuellen Abstandsbild erkennbar ist, die Verfolgung des ersten Merkmals abgebrochen wird. Die Verfolgung des anderen bzw. zweiten Merkmals wird aber fortgeführt. Hierdurch geht, im Gegensatz zu gewöhnlichen Objektverfolgungsverfahren, höchstens geringe Information verloren, da das Objekt immer noch über das andere Merkmal verfolgt werden kann.

Das Merkmal kann dann nach einiger Zeit wieder in den Abstandsbildern auftauchen. Es ist daher bevorzugt, dass in dem Fall, dass bei einer Verfolgung eines Objekts anhand wenigstens eines Merkmals in einem aktuellen Zyklus ein anderes Merkmal erkannt wird, dieses andere Merkmal ebenfalls verfolgt wird, wobei vorzugsweise zur Initialisierung die Ergebnisse der Verfolgung des wenigstens einen Merkmals verwendet werden. Diese Verfahrensvariante wird vorzugsweise auch für Objekte verwendet, die anfänglich nur durch ein Merkmal verfolgbar waren. Die Verwendung von insbesondere Geschwindigkeitsinformationen aus der Verfolgung des einen Merkmals zur Initialisierung der Verfolgung des anderen Merkmals führt zu einer genauen Verfolgung auch des anderen Merkmals schon nach dem ersten Verfolgungszyklus für das andere Merkmal.

Weiterhin ist es bevorzugt, dass aus einem aktuellen Abstandsbild aktuelle Lagen für wenigstens zwei Merkmale desselben Objekts ermittelt werden, und dass eine Schätzung wenigstens der Lagen der Merkmale auf der Basis der prädizierten Lagen und der ermittelten aktuellen Lagen für die Merkmale unabhängig voneinander erfolgt.

Zur Erkennung des Typs von Objekten und zur Einschätzung des möglichen dynamischen Verhaltens des Objekts ist es sinnvoll, Objekte in Objektklassen einzuordnen bzw. einem Objekt eine vorgegebene Objektklasse zuzuordnen. Beispiele für solche Objektklassen sind zum Beispiel Klassen für Fußgänger, Personenkraftwagen, Lastkraftwagen, Zweiräder, Busse und sonstige Gegenstände. Es ist daher bevorzugt, dass für wenigstens ein Objekt, insbesondere bei dessen Neubildung, ein durch eine Variation oder eine Größe der Parameterwerte für die Echopulseigenschaft gegebenes Merkmal ermittelt wird, und dass dem Objekt in Abhängigkeit von dem Auftreten des Merkmals eine Objektklasse zugeordnet wird. Während bei konventionellen Verfahren zur Ermittlung der Objektklasse nur Kontureigenschaften eines Objekts, beispielsweise Längen und Breiten, sowie gegebenenfalls dynamische Eigenschaften wie beispielsweise die maximal aufgetretene Geschwindigkeit verwendet werden, ist es mit dem erfindungsgemäßen Verfahren möglich, eine genauere Klassifikation durchzuführen, ohne dynamische Informationen verwenden zu müssen. So können beispielsweise Verkehrsschilder von einfachen Wänden oder anderen stationären Gegenständen anhand der Echopulseigenschaften unterschieden werden, da Verkehrsschilder aufgrund ihrer retroreflektierenden Oberflächen Echopulse mit besonders hoher Pulsenergie zurückwerfen und sich daher neben ihrer geometrischen Größe durch entsprechende Werte für den Parameter für die Echopulsenergie auszeichnen. Ist weiterhin beispielsweise von einem am Fahrbahnrand parkenden Fahrzeug nur dessen Heckpartie erkennbar, ist es mit dem erfindungsgemäßen Verfahren einfach möglich, dieses von einer entsprechenden Wand zu unterscheiden, die sich bei Verwendung von reinen Abstandsbildern in diesen nicht von einem Kraftfahrzeug unterscheidet. Dabei können insbesondere zur Klassifizierung für die Objektklassen typische Referenzverläufe der Parameter für die Echopulseigenschaft bzw. für die Größe der Parameterwerte für die Echopulseigenschaft vorgegeben werden. Diese können beispielsweise auf der Basis in Anwendungssituationen typisch vorkommender Gegenstände festgelegt werden.

Das erfindungsgemäße Verfahren wird vorzugsweise bei der Verfolgung von Objekten im Straßenverkehr verwendet.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird dabei insbesondere auch jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Programm auf einem Computer ausgeführt wird. Bei dem Datenträger kann es sich insbesondere um nichtflüchtige Speicher in Form von entsprechenden Halbleiterbauelementen, CDs, DVDs oder auch Disketten handeln.

Darüber hinaus ist Gegenstand der vorliegenden Erfindung eine Vorrichtung zur Verfolgung von Objekten mit mindestens einem optoelektronischen Sensor, vorzugsweise einem Laserscanner, mittels dessen Abstandsbilder eines Erfassungsbereichs mit Abstandsbildpunkten erfassbar sind, die jeweils durch Aussendung eines Pulses elektromagnetischer Strahlung und Detektion des von einem Punkt oder Bereich auf einem Gegenstand als Echopuls Pulses sowie Erfassung wenigstens einer von der Energie des Echopulses abhängigen Echopulseigenschaft des Echopulses erhältlich sind, und mit einer mit dem optoelektronischen Sensor verbundenen Datenverarbeitungseinrichtung, die zur Durchführung des erfindungsgemäßen Verfahrens ausgebildet ist. Die Datenverarbeitungseinrichtung kann insbesondere mit einem erfindungsgemäßen Computerprogramm programmiert sein.

Die Erfindung wird nun noch weiter beispielhaft anhand der Zeichnungen erläutert. Es zeigen:

Fig. 1    eine schematische Draufsicht auf eine Szene mit einem Fahrzeug, an dem ein Laserscanner angebracht ist, sowie zwei Fahrzeugen und einem Fußgänger im Erfassungsbereich des Laserscanners,

Fig. 2    eine schematische Darstellung eines zeitlichen Verlaufs eines Echopulses,

Fig. 3    ein schematisches Ablaufdiagramm eines Verfahrens zur Verfolgung von Objekten nach einer ersten Ausführungsform,

Fig. 4    ein schematisches Ablaufdiagramm eines Verfahrens zur Verfolgung von Objekten nach einer bevorzugten Ausführungsform der Erfindung,

Fig. 5    drei Ausschnitte aus nacheinander erfassten Abstandsbildern, in denen ein Heck eines Fahrzeugs durch einen sich an dem Heck vorbei bewegenden Fußgänger teilweise verdeckt ist,

Fig. 6    Diagramme von Echopulsbreitenverläufen entsprechend fünf verschiedenen Abstandsbildern der Situation in Fig. 5, und

Fig. 7    ein schematisches Ablaufdiagramm eines Verfahrens zur Verfolgung von Objekten nach einer weiteren bevorzugten Ausführungsform der Erfindung.

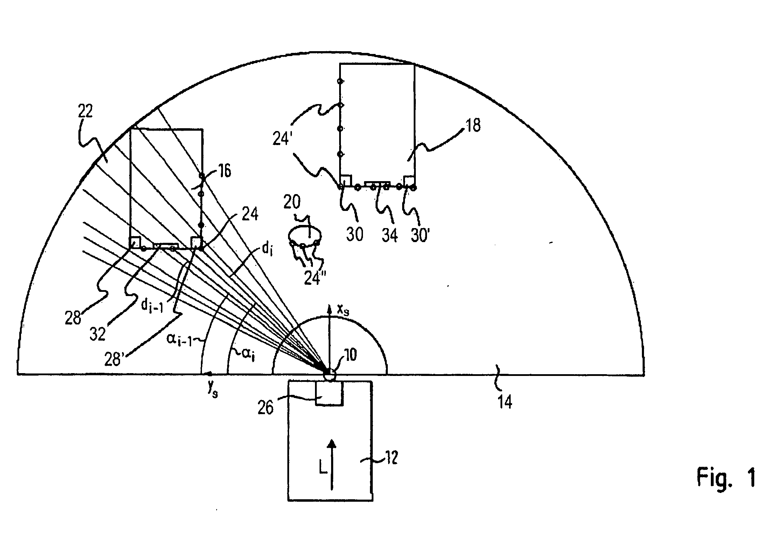

In Fig. 1 ist ein Laserscanner 10 an der Frontseite eines Fahrzeugs 12 montiert, um Gegenstände vor dem Fahrzeug 12 zu erfassen. Der Laserscanner 10 weist einen in Fig. 1 nur schematisch gezeigten Erfassungsbereich 14 auf, der aufgrund der Lage des Laserscanners 10 symmetrisch zur Längsachse L des Fahrzeugs 12 einen Winkel von etwa 180° abdeckt. Der Erfassungsbereich 14 ist in Fig. 1 nur schematisch und zur besseren Darstellung insbesondere in radialer Richtung zu klein dargestellt. In dem Erfassungsbereich 14 befinden sich beispielhaft drei Gegenstände 16, 18 und 20. Bei den Gegenständen 16 und 18 handelt es sich um Kraftfahrzeuge, während der Gegenstand 20 einen sich quer zu einer Längsrichtung des Fahrzeugs 12 bewegenden Fußgänger darstellt.

Der Laserscanner 10 tastet seinen Erfassungsbereich 14 in einer Abtastebene in grundsätzlich bekannter Weise mit einem mit konstanter Winkelgeschwindigkeit geschwenkten, gepulsten Laserstrahlungsbündel 22 ab, wobei ebenfalls umlaufend in konstanten Zeitabständen T zu Zeiten $\tau_i$ in festen Winkelbereichen um einen mittleren Winkel $\alpha_i$ detektiert wird, ob das Laserstrahlungsbündel 22 von einem Punkt bzw. Bereich eines Gegenstands zurückgeworfen wird. Der Index i läuft dabei von 1 bis zur Anzahl der Winkelbereiche im Erfassungsbereich. Von diesen Winkelbereichen sind in Fig. 1 nur einzelne gezeigt, unter anderem die den mittleren Winkeln $\alpha_{i-1}$ und $\alpha_i$ zugeordneten Winkelbereiche. Hierbei sind die Winkelbereiche zur deutlicheren Darstellung wiederum übertrieben groß gezeigt.

Zur Messung des Abstands eines Punkts bzw. Bereichs 24 auf einem Gegenstand wie dem Gegenstand 16 von dem Laserscanner 10 wird bei einem gegebenen Winkel jeweils ein Laserstrahlpuls vorgegebener bekannter Pulsform und Höhe abgestrahlt, der dann als Echopuls von diesem Punkt bzw. Bereich 24 wenigstens teilweise zurückgeworfen und von dem Laserscanner 10 empfangen wird. Anhand der Laufzeit des Laserstrahlpulses von dem Laserscanner 10 zu dem Punkt oder Bereich 24 und zurück zu dem Laserscanner 10 wird der Sensorabstand di des erfassten Gegenstandspunktes 24 von dem Laserscanner 10 ermittelt.

Der Laserscanner 10 erfasst daher in seinem $x_s$-$y_s$-Koordinatensystem als Koordinaten in einem Rohdatenelement für einen Gegenstandspunkt 24 auf der Oberfläche des Gegenstands 16 den Winkel $\alpha_i$ und den bei diesem Winkel festgestellten Abstand $d_i$, das heißt die Position des Gegenstandspunktes 24 in Polarkoordinaten relativ zu dem Laserscanner 10 bzw. dem Fahrzeug 12. Entsprechendes gilt für die Gegenstandspunkte 24' auf dem Fahrzeug 18 und die Gegenstandspunkte 24" auf dem Fußgänger 20. Bei einer Abtastung des Erfassungsbereichs 14 werden von dem Laserscanner 10 somit geordnet nach aufsteigenden Polarwinkeln Rohdatenelemente mit Koordinaten ($\alpha_i$, $d_i$) bereitgestellt, wobei i eine natürliche Zahl zwischen 1 und der Anzahl der von dem Laserscanner 10 erfassten Rohdatenelemente ist. Die Menge der bei einer Abtastung erfassten Rohdatenelemente bzw. daraus, gegebenenfalls nach Korrektur der Daten und/oder Transformation in ein anderes Koordinatensystem erhaltenen Abstands- bzw. Entfernungsbildpunkte, im Folgenden einfach als Bildpunkte bezeichnet, bildet ein Abstandsbild im Sinne der Erfindung. Die Bildpunkte werden dabei in der Reihenfolge der Erfassung, das heißt zunehmender Polarwinkel abgespeichert.

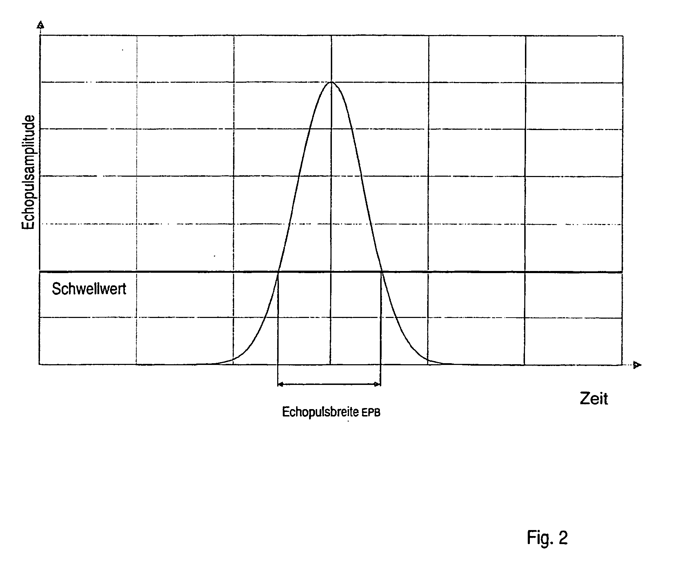

Bei der Erfassung eines Bildpunkts bzw. eines Rohdatenelements wird nicht nur die Laufzeit des Laserstrahlpulses ermittelt, sondern es wird auch eine Echopulsbreite (EPB) des jeweils von dem Gegenstand zurückgeworfenen Echopulses bestimmt. In Fig. 2 ist schematisch der zeitliche Verlauf der Intensität eines Echopulses gezeigt. Ein in den Figuren nicht gezeigtes Empfangselement des Laserscanners 10, mit dem der Echopuls empfangen wird, gibt ein in seiner Form der Form des Echopulses entsprechendes Signal aus, das das Produkt aus der Empfangsfläche des Empfangselements und der empfangenen Intensität des Echopulses wiedergibt. Die Intensität des Echopulses ist dabei proportional zur Energie des Echopulses. Die Echopulsbreite wird nun dadurch ermittelt, dass der Abstand von zwei Zeitpunkten ermittelt wird, zu denen die Intensität des Echopulses bzw. genauer eines Pegels eines entsprechendes Signals einen vorgegebenen Pegel ansteigend bzw. abfallend erreicht (vgl. Fig. 2). Dies wird in dem Laserscanner 10 in der Form realisiert, dass für das entsprechende Signal des Empfangselements des Laserscanners 10 ein entsprechender Signalschwellwert bzw. -pegel gesetzt wird und dass der Abstand von zwei Zeitpunkten ermittelt wird, zu denen das Signal den Signalschwellwert ansteigend bzw. abfallend erreicht. Der vorgegebene Signalschwellwert bzw. Pegel ist so gewählt, dass Rauschen nicht als Echopuls erkannt werden kann. Da die Echopulse keine Rechteckform haben, weist ein Echopuls gleicher Form, aber geringerer Energie bzw. Intensität entsprechend der Verjüngung des Echopulses in Richtung auf sein Maximum zu auch eine geringere Echopulsbreite auf. Die jeweils erfassten Echopulsbreiten werden den Abstandsbildpunkten zugeordnet, bei deren Erfassung sie jeweils ermittelt wurden.

Der Laserscanner 10 tastet seinen Erfassungsbereich 14 jeweils in aufeinander folgenden Abtastungen mit gleichem Zeitabstand T ab, so dass eine zeitliche Folge von Abtastungen und damit Abstandsbildern entsteht.

Zur Verarbeitung der Rohdatenelemente bzw. Abstandsbildpunkte weist der Laserscanner 10 eine Auswerteelektronik bzw. Datenverarbeitungseinrichtung 26 auf, die im Beispiel in dem Laserscanner 10 angeordnet ist, grundsätzlich aber auch davon abgesetzt angeordnet sein kann. Die Datenverarbeitungseinrichtung 26 weist unter anderem einen zur Ausführung eines Verfahrens nach einer ersten Ausführungsform mit einem Computerprogramm nach einer ersten Ausführungsform programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf.

Der Laserscanner 10 mit der Datenverarbeitungseinrichtung 26 bildet daher eine Vorrichtung zur Objektverfolgung nach einer ersten Ausführungsform .

Die Kraftfahrzeuge 16 und 18 weisen jeweils an den Ecken ihrer Heckpartie Heckleuchten mit Reflektoren bzw. Rückstrahlern 28, 28' bzw. 30, 30' sowie Kraftfahrzeugkennzeichen 32 bzw. 34 mit einer retroreflektierenden Grundfläche auf. Die Kraftfahrzeugkennzeichen 32 bzw. 34 sind dabei jeweils zwischen den Heckleuchten 28 und 28' bzw. 30 und 30' angeordnet.

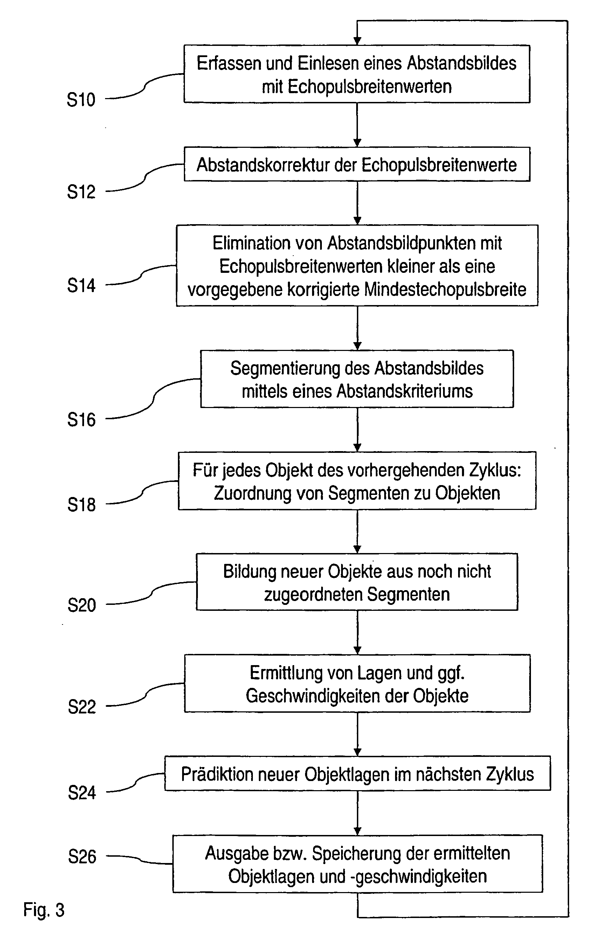

Ein Verfahren zur Verfolgung von Objekten nach einer ersten Ausführungsform ist grob schematisch in dem Ablaufdiagramm in Fig. 3 dargestellt.

Bei diesem Verfahren wird als Parameter für eine Echopulseigenschaft, die von der Echopulsenergie abhängt, die zuvor beschriebene Echopulsbreite verwendet. Dabei werden aus erfassten Abstandsbildern nur solche Abstandsbildpunkte verwendet, deren zugeordnete Echopulsbreiten einen vorgegebenen, einer Mindestechopulsenergie entsprechenden Schwellwert überschreiten.

Das Verfahren wird in aufeinander folgenden Zyklen durchgeführt, wobei jeder Zyklus mit dem Schritt S 10 beginnt.

Zunächst wird in Schritt S 10 eines aktuellen Zyklus nach der Erfassung eines aktuellen Abstandsbildes einschließlich den Abstandsbildpunkten des Abstandsbildes zugeordneten, aktuellen Echopulsbreitenwerte das Abstandsbild einschließlich der entsprechenden Echopulsbreitenwerte in die Datenverarbeitungseinrichtung 26 eingelesen. Soweit dies noch nicht geschehen ist, können die Koordinaten der Abstandsbildpunkte in das $x_s$-$y_s$-Sensorkoordinatensystem transformiert werden, wobei gleichzeitig eine Korrektur der Abstandsbildpunkte in Bezug auf eine Eigenbewegung des den Laserscanner 10 tragenden Fahrzeugs 12 erfolgen kann.

In dem folgenden Schritt S 12 werden dann alle Echopulsbreitenwerte in Bezug auf den Abstand der Abstandsbildpunkte von dem Laserscanner 10 korrigiert, denen die Echopulsbreitenwerte jeweils zugeordnet sind. Zu diesem Zweck werden die Echopulsbreitenwerte mit dem Quadrat des durch den jeweiligen Abstandsbildpunkt gegebenen Abstands des erfassten Gegenstandspunktes bzw. -bereichs von dem Laserscanner 10 multipliziert. Auf diese Weise werden Echopulsbreitenwerte erhalten, die wenigstens näherungsweise keine durch unterschiedliche Abstände der entsprechenden Gegenstandspunkte bzw. -bereiche von dem Laserscanner 10 verursachten Veränderungen enthalten. Die Echopulsbreitenwerte werden dabei durch die korrigierten Echopulsbreitenwerte ersetzt.

In Schritt S 14 werden dann aus den Abstandsbildpunkten des aktuellen Abstandsbildes alle diejenigen Abstandsbildpunkte eliminiert, deren korrigierte Echopulsbreitenwerte kleiner sind als eine vorgegebene Mindestechopulsbreite. Diese Mindestechopulsbreite ist so bestimmt, dass von Reflektoren, wie zum Beispiel Rückstrahlern in den Heckleuchten 28, 28', 30, 30' oder den Kraftfahrzeugkennzeichen 32 oder 34 sowie Reflektoren an Leitpfosten am Fahrbahnrand oder von Verkehrsschildern zurückgeworfene Echopulse in dem Abstandsbild beibehalten werden, während nur diffus von sonstigen Oberflächen auf Gegenständen zurückgeworfene Echopulse aufgrund ihrer niedrigeren Echopulsenergie und damit Echopulsbreite unterdrückt werden. Die Mindestechopulsbreite wird dabei vorzugsweise so niedrig gewählt, dass auch Reflektoren mit kleiner Fläche, wie sie beispielsweise an Leitpfosten verwendet werden, noch in dem verbleibenden Abstandsbild enthalten sind.

Auf der Basis des so entstandenen Abstandsbildes wird dann eine ansonsten konventionelle Objektverfolgung durchgeführt, wie sie beispielsweise in der in der Reihe Fortschritts-Berichte, Sachgebiet: Verkehrstechnik/Fahrzeugtechnik, Band Nr. 438 veröffentlichten Dissertation von Kirchner, Alexander mit dem Titel "Sensordatenverarbeitung eines Laserscanners für autonome Fahrfunktionen von Kraftfahrzeugen", Hamburg, 2000, ISBN: 3-18-343812-7, ISSN: 0178-9449 genauer beschrieben ist. Zur Objektverfolgung werden dabei Kalman-Filter verwendet.

Dabei werden Objekte jeweils durch einen Bezugspunkt, beispielsweise ihren geometrischen Schwerpunkt, bzw. dessen Lage, ihre Länge und Breite sowie die Geschwindigkeit des Bezugspunkts als Zustandsvariablen beschrieben.

In Schritt S 16 wird zunächst das in Schritt S 14 erhaltene Abstandsbild unter Bildung von Segmenten segmentiert. Dabei werden ausgehend von einem ersten Abstandsbildpunkt eines Segments weitere Abstandsbildpunkte in dem Abstandsbild gesucht, die von wenigstens einem bisher dem Segment zugeordneten Abstandsbildpunkt einen Abstand aufweisen, der kleiner ist als ein vorgegebener Segmentierungsabstand. Werden solche Bildpunkte gefunden, werden sie dem Segment zugeordnet und bei der weiteren Segmentierung nicht mehr beachtet. Sonst wird das Segment abgeschlossen und ein neues Segment begonnen. Der Segmentierungsabstand kann in Abhängigkeit von den typischerweise bei der Objektverfolgung auftretenden Gegenständen und dem räumlichen Auflösungsvermögen des Laserscanners 10 gewählt sein. Das in Schritt S 14 erhaltene Abstandsbild wird so vollständig in Segmente zerlegt, die keine gemeinsamen Bildpunkte aufweisen.

In Schritt S 18 werden dann die in Schritt S 16 erhaltenen Segmente Objekten zugeordnet, die bereits in dem vorhergehenden Zyklus vorhanden waren. Dazu wird in einem Suchbereich, dessen Größe unter anderem durch die Unsicherheit der Prädiktion gegeben ist, um eine im vorhergehenden Zyklus für den aktuellen Zyklus prädizierte Lage des Bezugspunkts des Objekts nach Segmenten gesucht. Werden Segmente in dem Suchbereich aufgefunden, werden diese dem jeweiligen Objekt zugeordnet. Eine beispielhafte Realisierung der Objekt-Segment-Zuordnung ist in der zuvor zitierten Dissertation von Kirchner detailliert beschrieben.

Nachdem diese Zuordnung für jedes Objekt durchgeführt wurde, können Segmente auftreten, die keinem bislang aufgetretenen Objekt zugeordnet werden können. In Schritt S20 werden daher aus noch nicht zugeordneten Segmenten neue Objekte gebildet, die aufgrund ihrer Größe vorgegebenen Objektklassen, beispielsweise für Fußgänger, Lastkraftwagen, Personenkraftwagen, Busse oder sonstige Gegenstände, zugeordnet werden.

In Schritt S22 werden dann aus den den Objekten zugeordneten Abstandsbildpunkten Lagen der Objekte bzw. der Bezugspunkte der Objekte ermittelt. Für solche Objekte, die bereits im vorhergehenden Zyklus erkannt wurden, werden zusätzlich Geschwindigkeiten ermittelt.

In Schritt S24 werden dann Lagen der vorhandenen Objekte bzw. der Bezugspunkte der Objekte im nächsten Zyklus prädiziert.

In Schritt S26 werden dann die ermittelten Objektlagen und -geschwindigkeiten sowie die Objektklassen für die in dem aktuellen Zyklus erkannten Objekte zur weiteren Verwendung ausgegeben bzw. gespeichert.

Das Verfahren wird dann in einem neuen Zyklus mit dem Schritt S 10 fortgesetzt.

Bei diesem Verfahren werden Objekte also nur anhand von Abstandsbildpunkten verfolgt, die stark reflektierenden Abschnitten auf den entsprechenden Gegenständen entsprechen, so dass insgesamt nur eine wesentlich geringere Anzahl von Bildpunkten zu handhaben ist als bei bekannten Verfahren ohne Verwendung der Echopulsbreiten, was die Ausführungsgeschwindigkeit des Verfahrens wesentlich erhöht.

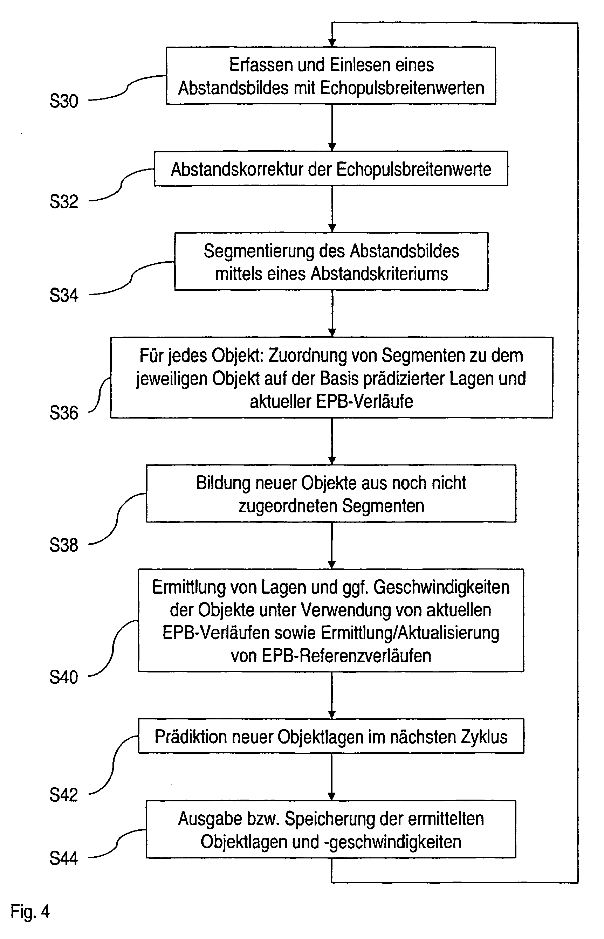

Ein Verfahren zur Verfolgung von Objekten nach einer bevorzugten Ausführungsform der Erfindung ist grob schematisch in Fig. 4 dargestellt. Auch bei diesem Verfahren wird als Parameter für die Echopulseigenschaft, die von der Echopulsenergie abhängt, die oben beschriebene Echopulsbreite verwendet. Diese wird jedoch in anderer Form benutzt als im ersten Ausführungsbeispiel. Jedem Objekt mit einem näherungsweise geradlinigen oder gewinkelten (teilweisen) Umriss in dem Abstandsbild wird ein Referenzverlauf der Echopulsbreite entlang eines geradlinigen Konturabschnitts des Objekts zugeordnet, entlang dessen für wenigstens einen Punkt bzw. Bereich korrigierte Echopulsbreitenwerte auftreten, die die im ersten Ausführungsbeispiel genannte Mindestechopulsbreite überschreiten und daher einem Reflektor entsprechen können. Dazu wird ein Feld verwendet, in dem, in jedem Zyklus aktualisiert, Echopulsbreitenwerte dem Konturabschnitt entsprechender aufeinander folgender Abstandsbildpunkte in dem Abstandsbild gespeichert sind. Sollten in dem Vektor Abstandsbildpunkte nicht dem Objekt zugeordnet sein, beispielsweise weil sie durch ein anderes Objekt verdeckt sind, so werden entsprechende Feldeinträge mit dem Wert Null belegt, so dass sich weiterhin ein Feld von Echopulsbreiten ergibt, dessen Einträge Bildpunkten entsprechen, die in Polarkoordinaten gleiche, der Winkelauflösung des Laserscanners 10 entsprechende Winkelabstände voneinander aufweisen.

Die bei dem Verfahren verwendete Vorrichtung nach einer bevorzugten Ausführungsform der Erfindung unterscheidet sich von der Vorrichtung im ersten Ausführungsbeispiel dadurch, dass der Prozessor zur Durchführung des Verfahrens nach der bevorzugten Ausführungsform mit einem Computerprogramm nach einer bevorzugten Ausführungsform der Erfindung programmiert ist.

Bei diesem Verfahren wird zunächst in Schritt S30, der wie der Schritt S 10 im ersten Ausführungsbeispiel ausgeführt wird, in einem aktuellen Zyklus ein Abstandsbild mit den Abstandsbildpunkten des Abstandsbildes zugeordneten Echopulsbreitenwerten erfasst und in die Datenverarbeitungseinrichtung 26 eingelesen.

In Schritt S32 erfolgt dann in gleicher Weise wie in Schritt S12 des Verfahrens des ersten Ausführungsbeispiels eine Abstandskorrektur der Echopulsbreitenwerte.

Im Unterschied zu dem Objektverfolgungsverfahren im ersten Ausführungsbeispiel wird nun jedoch in Schritt S34 eine Segmentierung des gesamten Abstandsbildes über ein Abstandskriterium durchgeführt, wobei der Segmentierungsabstand geringer gewählt werden kann, da die Anzahl der Abstandsbildpunkte dann höher ist und diese somit dichter zueinander benachbart liegen können. Ergebnis dieses Schritts ist also die Zerlegung des Abstandsbildes in Segmente, die jeweils keine gemeinsamen Abstandsbildpunkte aufweisen und allein durch die Relativanordnung der Abstandsbildpunkte der jeweiligen Segmente zueinander definiert sind.

Vor der eigentlichen Segmentierung werden noch Abstandsbildpunkte gesucht, die virtuellen Gegenstandspunkten, die auch als "Abrisskanten" bezeichnet werden, entsprechen. Bei der Erfassung der Abstandsbildpunkte kann nämlich die Situation auftreten, dass ein Gegenstandsbereich aus Sicht des Laserscanners 10 teilweise von einem anderen Gegenstandsbereich des gleichen Gegenstands oder eines anderen Gegenstands verdeckt wird. Dann kann der Fall eintreten, dass der von dem Laserscanner 10 ausgesandte Puls teilweise auf den einen Gegenstandsbereich und teilweise auf den anderen Gegenstandsbereich fällt und von beiden zurückgeworfen wird. In Abhängigkeit von dem Abstand zwischen den erfassten Bereichen in radialer Richtung von dem Laserscanner 10 wird dann ein einzelner Echopuls gebildet, der eine außergewöhnlich große Echopulsbreite aufweist. Der entsprechende Abstandsbildpunkt enthält dann eine mit potentiell großen Fehlern behaftete Abstandsinformation. Insbesondere kann der Abstandsbildpunkt einem nur virtuellen Gegenstandspunkt irgendwo in radialer Richtung von dem Laserscanner 10 zwischen den beiden Gegenstandsbereichen entsprechen. Für jeden der Abstandsbildpunkte wird daher überprüft, ob der ihm zugeordnete Echopulsbreitenwert einen vorgegebenen, sehr großen Grenzwert überschreitet und ob die in Polarkoordinaten in Bezug auf den Polarwinkel zu diesem benachbarten Abstandsbildpunkte Abstände aufweisen, die sich um mehr als einen Abstandsgrenzwert unterscheiden, der in Abhängigkeit von dem Grenzwert gewählt sein kann. Ist dies der Fall, liegt der oben beschriebene Fall vor. Der Abstandsbildpunkt wird dann aus dem Abstandsbild gelöscht. Alternativ kann er bei einer anderen Ausführungsform durch zwei Abstandsbildpunkte mit gleichen Polarwinkeln ersetzt werden, die jeweils Abstände aufweisen, die den Abständen der in Bezug auf den Polarwinkel benachbarten Abstandsbildpunkte entsprechen.

In Schritt S36 erfolgt für jedes in dem aktuellen Zyklus bereits bekannte Objekt eine Zuordnung von Segmenten zu dem jeweiligen Objekt. Hierzu werden zunächst die Segmente, wie in Schritt S 18 im ersten Ausführungsbeispiel, Objekten provisorisch zugeordnet, wenn diese in einem vorgegebenen Suchbereich um die im vorhergehenden Zyklus für den aktuellen Zyklus prädizierte Lage des Bezugspunkts liegen. Treten nahe beieinander liegende Objekte auf, können jedoch Mehrdeutigkeiten entstehen, das heißt, es können Segmente auftreten, die sowohl dem einen wie auch dem anderen Objekt zugeordnet werden könnten. Zur eindeutigeren Zuordnung von Segmenten zu Objekten werden daher für alle Segmente, die einem Objekt mit einem Merkmal zugeordnet werden könnten, Kreuzkorrelationsfunktionen für den das Merkmal definierenden Referenzverlauf der Echopulsbreitenwerte entlang eines Konturabschnitts des Objekts und einen durch die Abstandsbildpunkte und die diesen zugeordneten korrigierten Echopulsbreitenwerte gebildeten aktuellen Verlauf der Echopulsbreiten für ein Segment gebildet. Die Verläufe sind dabei in Feldern in der Reihenfolge der entsprechenden Bildpunkte mit zunehmendem Polarwinkel abgespeichert.

Dabei wird die Kreuzkorrelationsfunktion für ein Feld $R_i$ und ein Feld $V_i$ für eine Verschiebung k (k ist eine natürliche Zahl) folgendermaßen berechnet:

$$K(k) = \frac{\sum_{i=k+1}^{N}\left(R_{i-k} - \overline{R}\right)\left(V_i - \overline{V}\right)}{\sqrt{\sum_{i=k+1}^{N}\left(R_{i-k} - \overline{R}\right)^2 \sum_{i=1}^{N}\left(V_i - \overline{V}\right)^2}}$$

Die Verschiebung k entlang des Vektors entspricht dabei einer tatsächlichen räumlichen Verschiebung in der Abtastebene tangential zu dem Laserstrahlungsbündel 22, um eine der Winkelauflösung des Laserscanners 10 entsprechende Länge.

Weist die Kreuzkorrelationsfunktion als Funktion der Verschiebung k ein Maximum auf, das einen vorgegebenen Erkennungsschwellwert überschreitet, so wird davon ausgegangen, dass das entsprechende Merkmal in dem Segment wenigstens teilweise vorhanden ist. Das Segment wird dann dem Objekt zugeordnet.

Andernfalls kann es einem anderen Objekt zugeordnet werden.

Bei einer anderen Alternative kann statt der Kreuzkorrelationsfunktion die mittlere quadratische Abweichung der Verläufe als Funktion einer relativen Verschiebung k der Verläufe voneinander verwendet werden, die folgendermaßen definiert ist:

$$F(k) = \frac{1}{N-k} \sum_{i=k+1}^{N} (R_{i-k} - V_i)^2$$

In Schritt S38 werden dann aus noch nicht zugeordneten Segmenten wie in Schritt S20 des ersten Ausführungsbeispiels neue Objekte gebildet.

In Schritt S40 werden Lagen der Objekte ermittelt. Dabei werden wiederum die den Objekten zugeordneten Merkmale bzw. Referenzverläufe der Echopulsbreiten verwendet. Wird nämlich ein Teil eines Objekts durch ein anderes Objekt verdeckt, so können sich Ungenauigkeiten in der Lage des wenigstens teilweise verdeckten Objekts ergeben, die ohne Verwendung des Merkmals nicht einfach zu beseitigen sind.

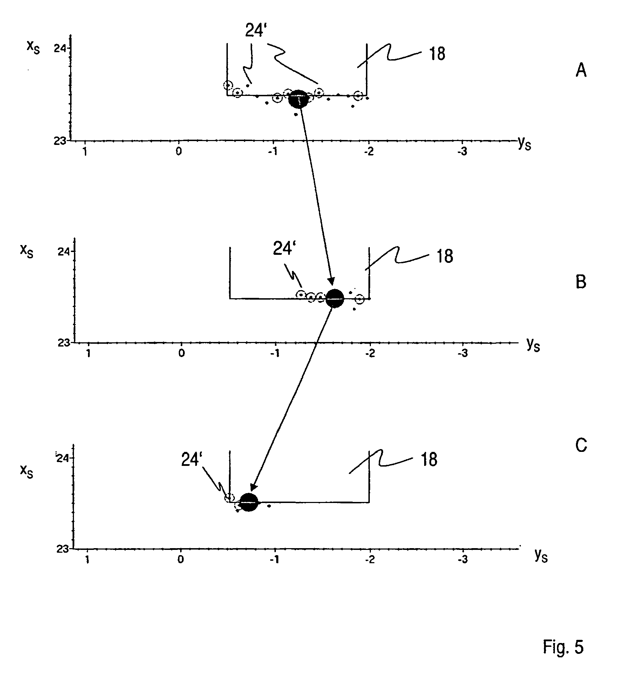

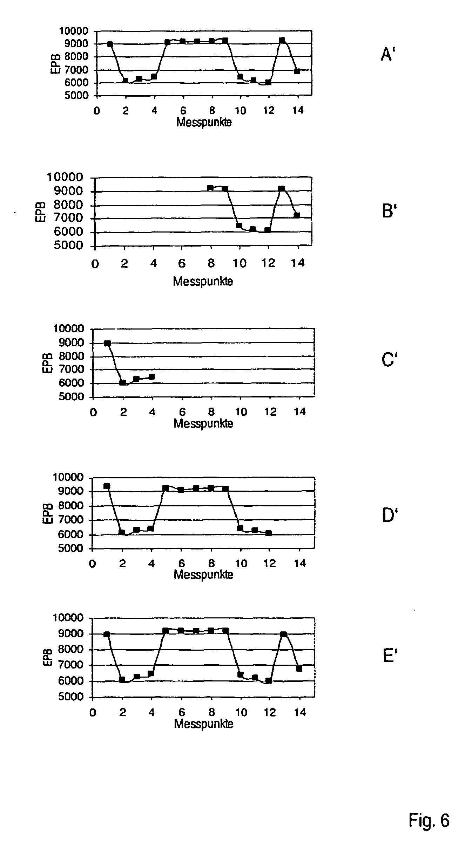

Dies ist in den Fig. 5 und 6 genauer gezeigt. Die Diagramme in diesen Figuren beziehen sich auf eine Situation ähnlich der in Fig. 1, in der ein vor dem Laserscanner 10 angeordnetes, stehendes Fahrzeug 18, von dem für den Laserscanner 10 nur die Heckpartie sichtbar ist, durch einen sich parallel zu der Heckpartie bewegenden Fußgänger 20 teilweise verdeckt wird.

In Fig. 5 sind die während der Bewegung des Fußgängers erfassbaren Abstandsbildpunkte 24' des Kraftfahrzeugs 18 in drei aufeinander folgenden Stadien A, B und C gezeigt. Die Abstandsbildpunkte, die innerhalb eines Kreises liegen, weisen dabei eine gegenüber den anderen Abstandsbildpunkten deutlich erhöhte korrigierte Echopulsbreite auf, die durch die Rückstrahler in den Heckleuchten 30 und 30' sowie die retroreflektierende Fläche des Kennzeichens 34 hervorgerufen werden.

Die den Stadien A, B und C entsprechenden Diagramme A bis C in Fig. 5 zeigen dabei, dass zunächst die gesamte Heckpartie für den Laserscanner 10 sichtbar ist (vgl. Diagramm A). Der sich in der Darstellung in Fig. 5 von links nach rechts bewegende Fußgänger verdeckt nun, wie in Diagramm B sichtbar, zunächst den linken Teil des Kraftfahrzeugs 18, so dass für den Laserscanner 10 nur der rechte Teil der Heckpartie erfassbar ist. Zu einem späteren Zeitpunkt hat sich der Fußgänger 20 vor den rechten Teil der Heckpartie bewegt, so dass nun für den Laserscanner 10, wie in Diagramm C gezeigt, nur der linke Teil des Hecks sichtbar ist. Würde nun die Lage des dem Kraftfahrzeug 18 entsprechenden Objekts allein durch die geometrischen Schwerpunkte der diesem Objekt bei einem konventionellen Objektverfolgungsverfahren zugeordneten Bildpunkte bestimmt, so ergäbe sich eine scheinbare Bewegung des tatsächlich stehenden Fahrzeugs 18. Zur Veranschaulichung sind in den Diagrammen in Fig. 5 die geometrischen Schwerpunkte durch schwarze Kreisflächen gekennzeichnet und zur Verdeutlichung der nur scheinbaren Bewegung durch Pfeile miteinander verbunden.

Um dieses Problem zu umgehen, wird für jedes Objekt zunächst überprüft, ob dieses teilweise durch ein vor ihm liegendes Objekt verdeckt sein kann. Dies kann beispielsweise immer dann vermutet werden, wenn in einer Kontur eines Objekts Lücken auftreten, in denen Objekte mit geringerem Abstand zu dem Laserscanner 10 auftreten, wenn die Größe des Objekts in dem aktuellen Zyklus kleiner ist als in einem vorhergehenden Zyklus oder wenn der bei einer Anordnung der Abstandsbildpunkte in Richtung zunehmender Polarwinkel an einem ersten oder letzten Bildpunkt eines Objekts in Richtung zu- bzw. abnehmender Polarwinkel nächster Abstandsbildpunkt einen wesentlich kleineren Abstand aufweist.

Für den entsprechenden Konturabschnitt wird dann nach der Lage des Maximums der Kreuzkorrelationsfunktion, d.h. der Verschiebung k bei der diese ein Maximum annimmt, gesucht und anhand der Kreuzkorrelationsfunktion festgestellt, welchem Abschnitt des Objekts ein gegebener Konturabschnitt bzw. entsprechende Segmente entspricht bzw. entsprechen. Dies ist in den Diagrammen in Fig. 6 veranschaulicht, die in größerer zeitlicher Auflösung den Stadien A bis C in Fig. 5 entsprechen. Die Diagramme zeigen dabei jeweils die Echopulsbreite in beliebigen aber festen Einheiten als Funktion des Feldindex des Feldes der aktuellen Echopulsbreitenwerte für den dem Fahrzeugheck entsprechenden Konturabschnitt. Wie in den Fig. 6A' bis E', gezeigt, bleibt hierzu im Allgemeinen genug Struktur des durch die Rückstrahler der Heckleuchten und das Kraftfahrzeugkennzeichen gegebenen Echopulsbreitenverlaufs. Auf diese Weise kann beispielsweise festgestellt werden, dass in dem Abstandsbild, das ausschnittsweise in dem Diagramm B in Fig. 5 gezeigt ist, das Segment nur dem rechten Teil des Fahrzeugs entspricht, so dass dieses entsprechend der Ausdehnung des Merkmals bzw. des dem Merkmal entsprechenden Konturabschnitts nach links verlängert werden kann, so dass der geometrische Schwerpunkt in der korrekten Lage bestimmt wird.

Nach der Ermittlung der Lagen werden für alle Objekte die Echopulsbreiten-Referenzverläufe ermittelt bzw. aktualisiert, wenn keine Teilverdeckung erkannt wurde. Dies hat den Vorteil, dass in aufeinander folgenden Bildern die Echopulsbreitenreferenzverläufe und die in einem aktuellen Abstandsbild auftretenden Verläufe entsprechender Segmente ähnliche Abstandsbildpunktanzahlen aufweisen und daher einfach miteinander verglichen werden können.

In Schritt S42 werden dann, wie in Schritt S24 des Verfahrens nach dem ersten Ausführungsbeispiel, neue Objektlagen bzw. Lagen der Bezugspunkte der Objekte im nächsten Zyklus prädiziert.

Schließlich werden in Schritt S44 die ermittelten Objektlagen und -geschwindigkeiten zur weiteren Verwendung ausgegeben bzw. gespeichert.

Das Verfahren kann dann in einem neuen Zyklus mit Schritt S30 fortgesetzt werden.

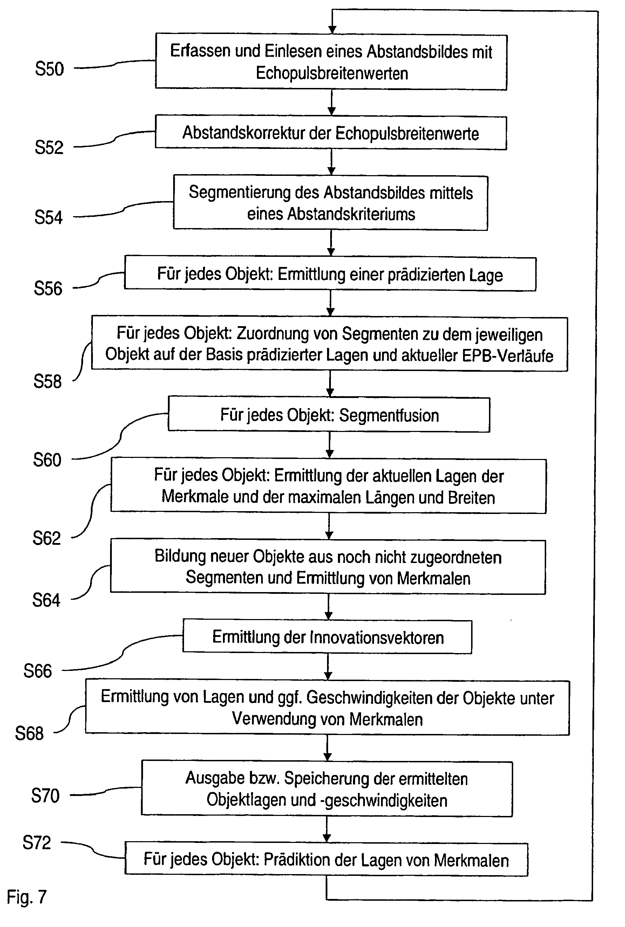

Ein Verfahren zur Verfolgung von Objekten nach einer weiteren bevorzugten Ausführungsform der Erfindung ist in groben Zügen schematisch in Fig. 7 veranschaulicht. Bei diesem Verfahren werden, soweit möglich, Objekte, die entsprechende Merkmale aufweisen, nicht anhand eines einzelnen Bezugspunkts für das ganze Objekt verfolgt, sondern anhand von möglichst mehreren einzelnen, diese Objekte kennzeichnenden Merkmalen. Bei den Merkmalen kann es sich zum einen um durch korrigierte Echopulsbreitenverläufe gegebene Merkmale und zum anderen durch bestimmte Konturabschnitte der Objekte gegebene Merkmale, im Folgenden auch als Konturmerkmale bezeichnet, handeln. Eine entsprechende Vorrichtung zur Verfolgung von Objekten nach einer weiteren bevorzugten Ausführungsform der Erfindung unterscheidet sich von der Vorrichtung des zweiten Ausführungsbeispiels nur dadurch, dass die Datenverarbeitungseinrichtung 26 zur Durchführung des Verfahrens nach der weiteren bevorzugten Ausführungsform durch Verwendung eines Computerprogramms nach einer weiteren bevorzugten Ausführungsform der Erfindung programmiert bzw. ausgebildet ist.

Bei diesem Verfahren werden Objekte, für die keine geeigneten Merkmale ermittelbar sind, beispielsweise im Wesentlichen in Bezug auf die optischen Oberflächeneigenschaften oder auch die formstrukturarme oder formstrukturlose Objekte mit gewöhnlichen Objektverfolgungsverfahren verfolgt. Nur andere Objekte werden mit dem im Folgenden geschilderten Verfahren verfolgt.

Bei den oben geschilderten Verfahren zur Objektverfolgung wurde jeweils ein Kalman-Filter verwendet. Der Kalman-Filter-Algorithmus wird üblicherweise in zwei Teile gegliedert, nämlich die Prädiktion und die Innovation, wobei angenommen wird, dass die Ermittlung eines aktuellen Messvektors für die für das Objekt messbaren Größen nicht gesondert ausgewiesen zu werden braucht. Zur Verfolgung der Merkmale im vorliegenden Ausführungsbeispiel werden ebenfalls Kalman-Filter verwendet. Da bei der Objektverfolgung im vorliegenden Fall die Ermittlung des aktuellen Messvektors jedoch ein wesentlicher Schritt ist, der einigen Aufwand erfordert, wird hier von einer Gliederung in drei Teile ausgegangen.

Der erste Teil ist die Prädiktion. In diesem Schritt werden ausgehend von einem a-posteriori-Schätzwert für den Zustandsvektor in einem aktuellen Zyklus ein vorhergesagter Zustandsvektor für den folgenden Zyklus und ausgehend von einer Schätzfehlerkovarianzmatrix im aktuellen Zyklus eine vorhergesagte Schätzfehlerkovarianzmatrix vorhergesagt bzw. prädiziert.

Im zweiten Teil, der Messvektorbestimmung, wird der Vektor der messbaren Größen bzw. Messgrößen ermittelt.

Im dritten Teil schließlich, der Innovation, wird die Berechnung eines a-posteriori-Schätzwertes für den Zustandsvektor in Abhängigkeit von dem aktuellen Messvektor und die Berechnung einer a-posteriori-Schätzfehlerkovarianzmatrix durchgeführt, nachdem eine Kalman-Matrix für den folgenden Zyklus ermittelt wurde. Die Differenz zwischen einem aktuellen Messvektor und dem erwarteten Messvektor wird als Innovationsvektor bezeichnet und spiegelt die relative Genauigkeit der Prädiktion gegenüber der neuen Messung wieder.

Prädiktion, Messvektorbestimmung und Innovation werden zyklisch wiederholt.

Zum einen werden Objekte verfolgt, denen nur wenigstens zwei durch entsprechende Variationen in den korrigierten Echopulsbreiten gegebene Merkmale, nicht aber Konturmerkmale zugeordnet werden können. Die Merkmale in Bezug auf Echopulsbreiten sind jeweils durch einzelne Peaks in dem Verlauf der korrigierten Echopulsbreitenwerte entlang einer Kontur eines solchen Objekts gegeben, wobei die Maxima der Peaks jeweils die Mindestechopulsbreite in dem ersten Ausführungsbeispiel überschreiten. Die Lage der Merkmale ist durch die Lage entsprechender Konturabschnitte relativ zu einem Bezugspunkt des Objekts vorgegeben.

Zum anderen werden Rechteckobjekte verfolgt, bei denen es sich beispielsweise um Kraftfahrzeuge handeln kann, deren Umriss in einer Ebene parallel zu einer Erfassungsebene des Laserscanners bzw. der Fahrbahn eine im Wesentlichen rechteckige Form aufweist. Als Konturmerkmale können dabei jeweils die Längsseiten und/oder die Heck- oder die Frontpartie des Kraftfahrzeugs verwendet werden. Weiterhin können als Merkmale, die durch Echopulsbreiten bzw. korrigierte Echopulsbreiten gegeben sind, einzelne Peaks in dem Verlauf der korrigierten Echopulsbreitenwerte entlang einer Kontur eines solchen Objekts und den Peaks entsprechende Konturabschnitte gegeben sein, wobei die Maxima der Peaks jeweils die Mindestechopulsbreite in dem ersten Ausführungsbeispiel überschreiten. Die Lage der Merkmale ist durch die Lage entsprechender Konturabschnitte relativ zu einem Bezugspunkt des Objekts vorgegeben. Solchen Merkmalen können insbesondere die Rückstrahler in den Heckleuchten der Kraftfahrzeuge und das Kraftfahrzeugkennzeichen entsprechen.

Die Konturmerkmale werden durch Zustandsvektoren beschrieben, die jeweils die Lage eines Bezugspunkts dieser Merkmale, die Koordinaten der Geschwindigkeiten der Bezugspunkte, eine durch die Ausrichtung gegenüber einer fest in Bezug auf den Laserscanner 10 vorgegebenen Richtung definierten Winkel und eine entsprechende Winkelgeschwindigkeit umfassen.

Die Merkmale in Bezug auf Echopulsbreiten dagegen umfassen nur die durch die geometrischen Schwerpunkte der die Merkmale bildenden Abstandsbildpunkte gegebenen Bezugspunkte bzw. deren Lagen und deren Geschwindigkeiten. Durch die Definition der Merkmale über nur einzelne Peaks ergibt sich eine größere Anzahl zu verfolgender Merkmale als bei Verwendung eines Referenzverlaufs, der mehrere Peaks enthält. Dies führt insgesamt zu einer genaueren Objektverfolgung.

Die entsprechenden Messvektoren umfassen jeweils nur die Lagekoordinaten der Bezugspunkte der Merkmale.

Zur Verfolgung der Merkmale werden Kalman-Filter verwendet, wobei als Kovarianzmatrizen die bei konventionellen Objektverfolgungsverfahren für Objekte dieser Art verwendeten Kovarianzmatrizen, wie sie beispielsweise in der oben genannten Dissertation von Kirchner angegeben sind, verwendet werden können.

Das Verfahren läuft genauer folgendermaßen ab:

In Schritt S50, der dem Schritt S30 im zweiten Ausführungsbeispiel entspricht, wird nach dem Erfassen eines Abstandsbildes mit den Abstandsbildpunkten des Abstandsbildes zugeordneten aktuellen Echopulsbreitenwerten das Abstandsbild einschließlich der entsprechenden Echopulsbreitenwerte in die Datenverarbeitungseinrichtung 26 eingelesen.

In Schritt S52 wird dann genau wie in Schritt S32 des zweiten Ausführungsbeispiels eine Abstandskorrektur der Echopulsbreitenwerte durchgeführt.

In Schritt S54 erfolgt dann eine Segmentierung des Abstandsbildes mittels eines Abstandskriteriums auf die gleiche Weise wie in dem Schritt S34 in dem zweiten Ausführungsbeispiel.

In den dann folgenden Schritten S56 bis S64 werden Messvektoren für Merkmale von aus dem letzten Zyklus bereits bekannten Objekte sowie für neu erkannte Objekte gebildet.

Zur Ermittlung der Lagen der Merkmale wird in Schritt S56 für jedes aus dem vorhergehenden Zyklus bereits bekannte Objekt eine prädizierte Lage ermittelt. Dazu werden die im vorhergehenden Zyklus prädizierten Lagen von dem jeweiligen Objekt zugeordneten Merkmalen verwendet. Dabei wird ausgenutzt, dass die durch Echopulsbreiten definierten Merkmale sehr genau die Lage des Objekts bzw. Fahrzeugs kennzeichnen, da die beiden Heckleuchten eindeutig die Lage der Heckpartie und damit die Lage des Kraftfahrzeugs wiedergeben. In einer Richtung orthogonal zu der Heckpartie, das heißt parallel zur Längsrichtung des Objekts, wird, soweit vorhanden, die Länge einer die Längsseite des Kraftfahrzeugs darstellenden Strecke, das heißt eines Konturmerkmals verwendet. Ist nur eines der durch Echopulsbreiten definierten Merkmale sichtbar, wird dessen Lage zusammen mit der Ausdehnung und Lage des der Längsseite des Objekts entsprechenden Konturmerkmals, nämlich einer Strecke, verwendet. Beispiele für die Ermittlung der Lagen von Konturmerkmalen sind in der von der Anmelderin der vorliegenden Patentanmeldung eingereichten deutschen Patentanmeldung mit dem Titel "Verfahren zur Verfolgung von Objekten" und dem amtlichen Aktenzeichen 103 53 348.6, die am 14. November 2003 eingereicht wurde, beschrieben.

In dem nun folgenden Schritt S58 erfolgt für jedes Objekt eine Zuordnung von Segmenten zu dem jeweiligen Objekt auf der Basis der prädizierten Lagen und gegebenenfalls aktueller Verläufe korrigierter Echopulsbreiten wie in dem Schritt S36 in dem zweiten Ausführungsbeispiel.

In Schritt S60 werden für alle Objekte, denen mehr als ein Segment zugeordnet wurde, die Segmente zu einem einzelnen Segment zusammengefasst.

In Schritt S62 werden dann für jedes Objekt aktuelle Lagen der Merkmale und die maximale Länge und Breite ermittelt. Dazu werden zum einen die Konturmerkmale, das heißt streckenförmige Abschnitte des Segments ermittelt. Die Details der Ermittlung sind in der von der Anmelderin der vorliegenden Patentanmeldung eingereichten deutschen Patentanmeldung mit dem Titel "Verfahren zur Verfolgung von Objekten" und dem amtlichen Aktenzeichen 103 53 348.6, die am 14. November 2003 eingereicht wurde, beschrieben. Die durch erhöhte korrigierte Echopulsbreiten definierten Merkmale werden dadurch bestimmt, dass in dem Objekt bzw. den Bildpunkten des Objekts und den zugeordneten korrigierten Echopulsbreitenwerten nach solchen Bildpunkten gesucht wird, deren korrigierte Echopulsbreitenwerte eine vorgegebene Mindestechopulsbreite, die wie im ersten Ausführungsbeispiel gegeben sein kann, überschreiten. Jeweils unmittelbar benachbarte Abstandsbildpunkte mit solchen korrigierten Echopulsbreitenwerten werden dann jeweils einem Merkmal zugeordnet. Durch Ermittlung der Lage der Merkmale in dem Objekt ist dabei eine klare Unterscheidung zwischen dem Rückstrahler der linken und der rechten Heckleuchte sowie dem Kraftfahrzeugkennzeichen möglich.

Können in dem aktuellen Zyklus Merkmale nicht mehr aufgefunden werden, wird die Verfolgung der entsprechenden Merkmale eingestellt.

Werden Merkmale aufgefunden, die nicht verfolgt wurden, werden entsprechende Kalman-Filter für diese initialisiert, wozu entsprechende Zustandsdaten wenigstens eines anderen Merkmals des gleichen Objekts verwendet werden können.

In Schritt S64 werden aus noch nicht zugeordneten Segmenten neue Objekte gebildet, was analog zu Schritt S38 in dem zweiten Ausführungsbeispiel erfolgt. Insbesondere werden hier auch für die neuen Objekte entsprechende Merkmale ermittelt.

In Schritt S66 werden für die Konturmerkmale und die durch Echopulsbreiten gegebenen Merkmale Innovationsvektoren ermittelt.

In Schritt S68 erfolgt dann eine Ermittlung der Lagen und gegebenenfalls Geschwindigkeiten der Objekte. Hierzu werden die ermittelten aktuellen Lagen der Konturmerkmale und der durch die Echopulsbreiten gegebenen Merkmale verwendet, wobei das Vorgehen in Bezug auf die Lagen dem Vorgehen in Schritt S56 entspricht. Bei der Ermittlung der Geschwindigkeiten der Objekte, die nicht für in dem aktuellen Zyklus neu erkannte Objekte möglich ist, erfolgt dabei eine Mittelung über die Geschwindigkeiten der dem Objekt zugeordneten Konturmerkmale und der durch Echopulsbreiten definierten Merkmale entsprechend der Größen der Innovationsvektoren für die Geschwindigkeiten, so dass Geschwindigkeiten von Merkmalen, deren Prädiktion genauer ist als die von anderen, stärker gewichtet werden. Weist ein Objekt beispielsweise nur zwei Merkmale i und j auf, ergibt sich die folgende Formel für die Schätzung des Geschwindigkeitsvektors v des Objekts im Zyklus m:

$$v(m) = g(m) \cdot v^i(m) + (1 - g(m)) \cdot v^j(m).$$

Dabei bezeichnen $v^i(m)$ und $v^j(m)$ die a-posteriori-Schätzungen für die Geschwindigkeitsvektoren für die Merkmale. Das Gewicht g(m) ergibt sich aus den Betragsquadraten der Geschwindigkeitskomponenten der Innovationsvektoren für die Merkmale i und j ($a_{vx}^i$, $a_{vy}^i$) bzw. ($a_{vx}^j$, $a_{vy}^j$) zu

$$g(m) = \frac{g^j(m)}{g^i(m) + g^j(m)}$$

mit

$$g^{i/j}(m) = \left(a_{vx}^{i/j}\right)^2 + \left(a_{vy}^{i/j}\right)^2.$$

In dem folgenden Schritt S70 werden die ermittelten Objektlagen und -geschwindigkeiten zur weiteren Verwendung ausgegeben bzw. gespeichert.

In dem folgenden Schritt S72 werden dann für jedes Objekt die Lagen der Merkmale im folgenden Zyklus prädiziert.

Danach wird das Verfahren in einem neuen Zyklus mit dem Schritt S50 fortgesetzt.

Durch die getrennte Verfolgung der Merkmale ergibt sich eine außerordentlich gute Genauigkeit bei der Ermittlung der Geschwindigkeiten. Darüber hinaus ist auch eine eindeutige Identifizierung der Objekte in der Regel möglich, da diese zusätzlich durch die Merkmale in Bezug auf die Echopulsbreiten definiert sind.

Bezugszeichenliste

| 10 | Laserscanner |
| 12 | Fahrzeug |
| 14 | Erfassungsbereich |
| 16 | Kraftfahrzeug |
| 18 | Kraftfahrzeug |
| 20 | Fußgänger |
| 22 | Laserstrahlbündel |
| 24, 24', 24" | Gegenstandspunkte |
| 26 | Datenverarbeitungseinrichtung |
| 28, 28' | Heckleuchten |
| 30, 30' | Heckleuchten |
| 32 | Kraftfahrzeugkennzeichen |
| 34 | Kraftfahrzeugkennzeichen |
| L | Längsachse |

**Patentansprüche**

1. Verfahren zur Verfolgung von Objekten, die Gegenstände (16, 18, 20) im Erfassungsbereich eines Sensors (10) für elektromagnetische Strahlung, insbesondere eines Laserscanners, entsprechen, auf der Basis von in zeitlicher Folge von dem Sensor (10) erfassten Abstandsbildern des Erfassungsbereichs (14) mit Abstandsbildpunkten (24, 24', 24"), die jeweils durch Aussendung eines Pulses elektromagnetischer Strahlung und Detektion des von einem Punkt oder Bereich auf einem Gegenstand (16, 18, 20) als Echopuls zurückgeworfenen Pulses sowie Erfassung wenigstens einer von der Energie des Echopulses abhängigen Echopulseigenschaft des Echopulses erhalten wurden und jeweils einen Winkel und einen Abstand enthalten, wobei die Echopulsenergie von den optischen Eigenschaften der Oberfläche des Punktes oder Bereichs abhängt, und denen jeweils wenigstens ein Wert für einen Parameter für die Echopulseigenschaft zugeordnet ist, bei dem in aufeinander folgenden Zyklen jeweils in einem aktuellen Zyklus in einem aktuellen Abstandsbild nach Abstandsbildpunkten (24, 24', 24") gesucht wird, die einem aus einem vorhergehenden Zyklus bekannten Objekt entsprechen, und aus dem Objekt zugeordneten Abstandsbildpunkten (24, 24', 24") des aktuellen Abstandsbildes eine aktuelle Lage des Objekts ermittelt wird, wobei den Abstandsbildpunkten (24, 24', 24") zugeordnete Parameterwerte der Echopulseigenschaft verwendet werden, und wenigstens einem Objekt ein Referenzverlauf des Parameters für die Echopulseigenschaft entlang wenigstens eines Abschnitts einer entlang aufeinander folgender, unter aufsteigenden Winkeln erhaltener Abstandsbildpunkte verlaufenden Kontur des Objekts als Merkmal zugeordnet wird, wobei zur Suche nach dem Merkmal in einem aktuellen Abstandsbild ein Vergleich zwischen dem Referenzverlauf des Parameters für die Echopulseigenschaft aus einem vorhergehenden Zyklus und einem durch gewählte aktuelle Abstandbildpunkte (24, 24', 24") und diesen zugeordnete Parameterwerte für die Echopulseigenschaft gegebenen aktuellen Verlauf des Parameters der Echopulseigenschaft verwendet wird, und wobei das Merkmal zur Verfolgung des Objekts verwendet wird.

2. Verfahren nach Anspruch 1,
**dadurch gekennzeichnet,**
**dass** die den Abstandsbildpunkten (24, 24', 24") zugeordneten Parameterwerte für die Echopulseigenschaft in Bezug auf den durch den jeweiligen Abstandsbildpunkt (24, 24', 24") gegebenen Abstand von dem Sensor (10) korrigiert werden.

3. Verfahren nach Anspruch 1 oder 2,
**dadurch gekennzeichnet,**
**dass** als Echopulseigenschaft eine Breite des jeweiligen Echopulses oder eines entsprechenden Signalpulses eines den Echopuls empfangenden Empfangselements bei einem vorgegebenen Pegel verwendet wird.

4. Verfahren nach einem der vorhergehenden Ansprüche,
**dadurch gekennzeichnet,**
**dass** als Echopulseigenschaft eine Pulsfläche des jeweiligen Echopulses verwendet wird.

5. Verfahren nach einem der vorhergehenden Ansprüche,
**dadurch gekennzeichnet,**
**dass** als Echopulseigenschaft eine Pulshöhe des jeweiligen Echopulses verwendet wird.

6. Verfahren nach einem der vorhergehenden Ansprüche,
**dadurch gekennzeichnet,**
**dass** von einem Abstandsbild nur solche Abstandsbildpunkte (24, 24', 24") verwendet werden, denen Parameterwerte zugeordnet sind, die Echopulsenergien entsprechen, die eine vorgegebene Mindestechopulsenergie überschreiten.

7. Verfahren nach einem der vorhergehenden Ansprüche,
**dadurch gekennzeichnet,**
**dass** wenigstens einem Objekt ein durch eine Größe der Parameterwerte für die Echopulseigenschaft gegebenes Merkmal zugeordnet wird, und
**dass** das Merkmal zur Erkennung und/oder Verfolgung des Objekts verwendet wird.

8. Verfahren nach einem der vorhergehenden Ansprüche,
**dadurch gekennzeichnet,**
**dass** zur Suche nach dem gegebenen Merkmal eine Kreuzkorrelation zwischen dem Referenzverlauf des Parameters für die Echopulseigenschaft und dem aktuellen Verlauf des Parameters der Echopulseigenschaft verwendet wird.

9. Verfahren nach einem der vorhergehenden Ansprüche,
**dadurch gekennzeichnet,**
**dass** der Referenzverlauf für das Merkmal in einem aktuellen Zyklus aktualisiert wird.

10. Verfahren nach einem der vorhergehenden Ansprüche,
**dadurch gekennzeichnet,**
**dass** das aktuelle Abstandsbild unter Bildung von Segmenten segmentiert wird, und
**dass** bei der Zuordnung von Segmenten zu dem Objekt das Merkmal in denjenigen Abstandsbildpunkten (24, 24', 24") und den zugeordneten Parameterwerten gesucht wird, die durch Segmente gegeben sind, die für eine Zuordnung zu dem Objekt in Betracht kommen.

11. Verfahren nach einem der vorhergehenden Ansprüche,
**dadurch gekennzeichnet,**
**dass,** insbesondere bei einer Teilverdeckung des Objekts durch ein anderes Objekt, das Merkmal zur Ermittlung der Lage des Objekts verwendet wird.

12. Verfahren nach einem der vorhergehenden Ansprüche,
**dadurch gekennzeichnet,**
**dass** für wenigstens ein Objekt aus den Abstandsbildern wenigstens ein weiteres Merkmal ermittelt wird,
**dass** wenigstens nach einer Anfangsphase das Merkmal und das weitere Merkmal des Objekts wenigstens während solcher aufeinander folgender Zyklen, in denen die Merkmale jeweils erfassbar sind, insoweit getrennt voneinander verfolgt werden, als in einem aktuellen Zyklus zumindest die Prädiktion von Lagen und/oder Geschwindigkeiten der Merkmale und die Ermittlung von Schätzwerten für die Geschwindigkeiten der Merkmale bei gegebenen aktuellen Lagen der Merkmale getrennt voneinander durchgeführt werden, und
**dass** auf der Basis der Ergebnisse der Verfolgung der Merkmale wenigstens eine Lage und/oder Geschwindigkeit des Objekts ermittelt wird.

13. Verfahren nach Anspruch 12,
**dadurch gekennzeichnet,**
**dass** das weitere Merkmal einen charakteristischen Konturabschnitt eines Gegenstands (16, 18, 20) in dem Erfassungsbereich betrifft.

14. Verfahren nach Anspruch 12 oder 13,
**dadurch gekennzeichnet,**
**dass** für einen Gegenstand (16, 18, 20), der in dem Erfassungsbereich eine näherungsweise rechteckige Kontur aufweist, als weitere Merkmale zwei im Wesentlichen zueinander orthogonale Seiten des Gegenstands (16, 18, 20) verwendet werden.

**15.** Verfahren nach einem der Ansprüche 12 bis 14, **dadurch gekennzeichnet,**
**dass** die Ermittlungen der aktuellen Lagen wenigstens zweier Merkmale desselben Objekts bzw. Gegenstands (16, 18, 20) aus einem aktuellen Abstandsbild in einem aktuellen Zyklus getrennt voneinander erfolgen.

**16.** Verfahren nach einem der Ansprüche 12 bis 15, **dadurch gekennzeichnet,**
**dass** in einem vorhergehenden Zyklus für wenigstens zwei Merkmale desselben Objekts Lagen der Merkmale in einem aktuellen Zyklus prädiziert werden,
**dass** aus den prädizierten Lagen der Merkmale des Objekts eine prädizierte Lage des Objekts ermittelt wird,
**dass** dem Objekt auf der Basis der prädizierten Lage des Objekts Bildpunkte des aktuellen Abstandsbildes zugeordnet werden, und
**dass** aktuelle Lagen der Merkmale in dem aktuellen Zyklus auf der Basis der dem Objekt zugeordneten Abstandsbildpunkte (24, 24', 24") ermittelt werden.

**17.** Verfahren nach einem der Ansprüche 12 bis 16, **dadurch gekennzeichnet,**
**dass** die Abstandsbilder segmentiert werden, und
**dass** in dem Fall, dass mehrere Segmente einem Objekt zuzuordnen sind, die Segmente zu einem neuen Segment zusammengefasst werden.

**18.** Verfahren nach einem der Ansprüche 12 bis 17, **dadurch gekennzeichnet,**
**dass** die Abstandsbilder segmentiert werden,
**dass** geprüft wird, ob zwei Merkmale für ein Objekt in einem Segment enthalten sind, und
**dass** für die unabhängige Verfolgung der Merkmale nur entsprechende Teile eines Segments verwendet werden.

**19.** Verfahren nach einem der Ansprüche 12 bis 18, **dadurch gekennzeichnet,**
**dass** die Geschwindigkeit eines Objekts als gewichteter Mittelwert der Geschwindigkeiten der Merkmale für das Objekt ermittelt wird.

**20.** Verfahren nach einem der Ansprüche 12 bis 19, **dadurch gekennzeichnet,**
**dass** zur Verfolgung der Merkmale zunächst Lagen der Merkmale prädiziert werden,
**dass** nach einer Ermittlung der Merkmale in einem aktuellen Abstandsbild in Abhängigkeit von den entsprechenden prädizierten Lagen eine aktuelle Lage des Merkmals ermittelt wird, und
**dass** zur Ermittlung der Geschwindigkeit des Objekts die Geschwindigkeit desjenigen Merkmals, für das die Abweichungen zwischen der prädizierten Lage des Merkmals und der auf der Basis eines aktuellen Abstandsbildes ermittelten Lage des Merkmals kleiner ist als bei dem anderen Merkmal, stärker als die Geschwindigkeit des anderen Merkmals gewichtet wird.

**21.** Verfahren nach einem der Ansprüche 12 bis 20, **dadurch gekennzeichnet,**
**dass** in dem Fall, dass eines der Merkmale in einem aktuellen Zyklus nicht in dem aktuellen Abstandsbild erkennbar ist, auf der Basis der für den aktuellen Zyklus prädizierten Lage des Merkmals eine Lage des Merkmals für den nächsten Zyklus prädiziert wird.

**22.** Verfahren nach einem der Ansprüche 12 bis 20, **dadurch gekennzeichnet,**
**dass** in dem Fall, dass eines der Merkmale in einem aktuellen Zyklus nicht in dem aktuellen Abstandsbild erkennbar ist, die Verfolgung dieses Merkmals abgebrochen wird.

**23.** Verfahren nach einem der Ansprüche 12 bis 22, **dadurch gekennzeichnet,**
**dass** in dem Fall, dass bei einer Verfolgung eines Objekts anhand wenigstens eines Merkmals in einem aktuellen Zyklus ein anderes Merkmal erkannt wird, dieses andere Merkmal ebenfalls verfolgt wird, wobei vorzugsweise zur Initialisierung die Ergebnisse der Verfolgung des wenigstens einen Merkmals verwendet werden.

**24.** Verfahren nach einem der vorhergehenden Ansprüche,
**dadurch gekennzeichnet,**
**dass** für wenigstens ein Objekt, insbesondere bei dessen Neubildung, ein durch eine Variation oder eine Größe der Parameterwerte für die Echopulseigenschaft gegebenes Merkmal ermittelt wird, und
**dass** dem Objekt in Abhängigkeit von dem Auftreten des Merkmals eine Objektklasse zugeordnet wird.

**25.** Computerprogramm mit Programmcode-Mitteln, um das Verfahren nach einem der Ansprüche 1 bis 24 durchzuführen, wenn das Programm auf einem Computer ausgeführt wird.

**26.** Computerprogrammprodukt mit Programmcode-Mitteln, die auf einem computerlesbaren Datenträger gespeichert sind, um das Verfahren nach einem der Ansprüche 1 bis 24 durchzuführen, wenn das Programm auf einem Computer ausgeführt wird.

**27.** Vorrichtung zur Verfolgung von Objekten (16, 18) mit mindestens einem optoelektronischen Sensor (10), vorzugsweise einem Laserscanner (10), mittels dessen Abstandsbilder eines Erfassungsbereichs mit Abstandsbildpunkten (24, 24', 24") erfassbar sind, die jeweils durch Aussendung eines Pulses elektromagnetischer Strahlung und Detektion des von einem Punkt oder Bereich auf einem Gegenstand (16, 18, 20) als Echopuls zurückgeworfenen Pulses sowie Erfassung wenigstens einer von der Energie des Echopulses abhängigen Echopulseigenschaft des Echopulses erhältlich sind und jeweils einen Winkel und einen Abstand enthalten, wobei die Echopulsenergie von den optischen Eigenschaften der Oberfläche des Punktes oder Bereichs abhängt, und denen jeweils wenigstens ein Wert für einen Parameter für die Echopulseigenschaft zugeordnet ist, und mit einer mit dem optoelektronischen Sensor (10) verbundenen Datenverarbeitungseinrichtung (26), umfassend Mittel zum Suchen nach Abstandsbildpunkten (24, 24', 24") in einem aktuellen Abstandsbild in aufeinander folgenden Zyklen jeweils in einem aktuellen Zyklus, wobei die Abstandsbildpunkte (24, 24', 24") einem aus einem vorhergehenden Zyklus bekannten Objekt entsprechen, und Mittel zum Ermitteln einer aktuelle Lage des Objekts aus dem Objekt zugeordneten Abstandsbildpunkten (24, 24', 24") des aktuellen Abstandsbildes, wobei den Abstandsbildpunkten (24, 24', 24") zugeordnete Parameterwerte der Echopulseigenschaft verwendet werden, und

Mittel zum Zuordnen eines Referenzverlaufs des Parameters für die Echopulseigenschaft entlang wenigstens eines Abschnitts einer entlang aufeinander folgender, unter aufsteigenden Winkeln erhaltener Abstands bildpunkte verlaufenden Kontur des Objekts zu wenigstens einem Objekt als Merkmal, wobei zur Suche nach dem Merkmal in einem aktuellen Abstandsbild der Referenzverlauf des Parameters für die Echopulseigenschaft aus einem vorhergehenden Zyklus und ein durch gewählte aktuelle Abstandbildpunkte (24, 24', 24") und diesen zugeordnete Parameterwerte für die Echopulseigenschaft gegebener aktueller Verlauf des Parameters der Echopulseigenschaft miteinander verglichen werden, und wobei das Merkmal zur Verfolgung des Objekts verwendet wird.

## Claims

1. A method for the tracking of objects which correspond to real objects (16, 18, 20) in the detection region of a sensor (10) for electromagnetic radiation, in particular of a laser scanner, on the basis of spatial separation images of the detection region (14) having spatial separation image points (24, 24', 24") which are detected in a time sequence by the sensor (10) and which were obtained in each case by transmission of a pulse of electromagnetic radiation and by detection of the pulse reflected back as an echo pulse from a point or region on a real object (16, 18, 20) as well as by detection of at least one echo pulse property of the echo pulse dependent on the energy of the echo pulse, which each include an angle and a separation, with the echo pulse energy depending on the optical properties of the surface of the point or region, and with which in each case at least one value for a parameter for the echo pulse property is associated, wherein

a search is made in sequential cycles in each case in a then current cycle in a then current spatial separation image for spatial separation image points (24, 24', 24") which correspond to an object known from a preceding cycle and a then current position of the object is determined from spatial separation image points (24, 24', 24") of the then current spatial separation image associated with the object, with parameter values of the echo pulse property associated with the spatial separation image points (24, 24', 24") being used; and

a reference evolution of the parameter for the echo pulse property along at least one section of a contour of the object extending along sequential spatial separation image points obtained at increasing angles is associated as a feature with the at least one object, with a comparison between the reference evolution of the parameter for the echo pulse property from a preceding cycle and a then current evolution of the parameter of the echo pulse property given by selected then current spatial separation images (24, 24', 24") and by parameter values for the echo pulse property associated with them is used for the search for the feature in a then current spatial separation image, and wherein the feature is used for the tracking of the object.

2. A method in accordance with claim 1, **characterised in that** the parameter values for the echo pulse property associated with the spatial separation image points (24, 24', 24") are corrected with respect to the separation from the sensor (10) given by the respective spatial separation image point (24, 24', 24").

3. A method in accordance with claim 1 or claim 2, **characterised in that** a width of the respective echo pulse or of a corresponding signal pulse of a receiver element receiving the echo pulse at a preset level is used as the echo pulse property.

4. A method in accordance with any one of the preceding claims, **characterised in that** a pulse area of the respective echo pulse is used as the echo pulse property.

5. A method in accordance with any one of the preceding claims, **characterised in that** a pulse level of the respective echo pulse is used as the echo pulse property.

6. A method in accordance with any one of the preceding claims, **characterised in that** only those spatial separation image points (24, 24', 24") of a spatial separation image are used with which parameter values are associated which correspond to echo pulse energies which exceed a preset minimum echo pulse energy.

7. A method in accordance with any one of the preceding claims, **characterised in that** a feature given by a value of the parameter values for the echo pulse property is associated with at least one object; and **in that** the feature is used for the recognition and/or tracking of the object.

8. A method in accordance with any one of the preceding claims, **characterised in that** a cross-correlation between the reference evolution of the parameter for the echo pulse property and the then current evolution of the parameter of the echo pulse property is used for the search for the given feature.

9. A method in accordance with any one of the preceding claims, **characterised in that** the reference evolution for the feature is updated in a then current cycle.

10. A method in accordance with any one of the preceding claims, **characterised in that** the then current spatial separation image is segmented while forming segments; and **in that**, on the association of segments with the object, the feature is searched for in those spatial separation image points (24, 24', 24") and in the associated parameter values which are given by segments which can be considered for an association with the object.

11. A method in accordance with any one of the preceding claims, **characterised in that** the feature is used for the determination of the position of the object, in particular on a partial covering of the object by another object.

12. A method in accordance with any one of the preceding claims, **characterised in that** at least one further feature is determined from the spatial separation images for at least one object; **in that**, at least after a starting phase at least during such sequential cycles in which the features are respectively detectable, the feature and the further feature of the objects are tracked separately from one another to the extent that at least the prediction of positions and/or speeds of the features and the determination of estimated values for the speeds of the features are carried out separately from one another in a then current cycle with given then current positions of the features; and **in that** at least one position and/or speed of the object is/are determined on the basis of the results of the tracking of the features.

13. A method in accordance with claim 12, **characterised in that** the further feature relates to a characteristic contour section of a real object (16, 18, 20) in the detection region.

14. A method in accordance with claim 12 or claim 13, **characterised in that** two sides of the real object (16, 18, 20) substantially orthogonal to one another are used as further features for a real object (16, 18, 20) having an approximately rectangular contour in the detection region.

15. A method in accordance with any one of the claims 12 to 14, **characterised in that** the determinations of the then current positions of at least two features of the same objects or real objects (16, 18, 20) from a the current spatial separation image take place separately from one another in a then current cycle.

16. A method in accordance with any one of the claims 12 to 15, **characterised in that** positions of the features in a then current cycle are predicted in a preceding cycle for at least two features of the same object; **in that** a predicted position of the object is determined from the predicted positions of the features of the object; **in that** image points of the then current spatial separation image are associated with the object on the basis of the predicted position of the object; and **in that** then current positions of the features in the then current cycle are determined on the basis of the spatial separation image points (24, 24', 24") associated with the object.

17. A method in accordance with any one of the claims 12 to 16, **characterised in that** the spatial separation images are segmented; and **in that**, in the case that a plurality of segments are to be associated with an object, the segments are combined to form a new segment.

18. A method in accordance with any one of the claims 12 to 17, **characterised in that** the spatial separation images are segmented; **in that** a check is made whether two features for an object are contained in a segment; and **in that** only corresponding parts of a segment are used for the independent tracking of the features.

19. A method in accordance with any one of the claims 12 to 18, **characterised in that** the speed of an object is determined as a weighted mean value of the speeds of the features for the object.

20. A method in accordance with any one of the claims 12 to 19, **characterised in that** positions of the features are first predicted for the tracking of the features; **in that**, after a determination of the features in a then current spatial separation image in dependence on the corresponding predicted positions, a then current position of the feature is determined; and **in that**, for the determination of the speed of the object, the speed of that feature for which the deviations between the predicted position of the feature and the position of the feature determined on the basis of a then current spatial separation image is smaller than in the other feature is weighted more than the speed of the other feature.

21. A method in accordance with any one of the claims 12 to 20, **characterised in that**, in the event that one of the features in a then current cycle cannot be recognised in the then current spatial separation image, a position of the feature is predicted for the next cycle on the basis of the feature predicted for the then current cycle.

22. A method in accordance with any one of the claims 12 to 20, **characterised in that**, in the event that one of the features in a then current cycle is not recognizable in the then current spatial separation image, the tracking of this feature is aborted.

23. A method in accordance with any one of the claims 12 to 22, **characterised in that** in the event that another feature is recognized on a tracking of an object with reference to at least one feature n a then current cycle, this other feature is likewise tracked, with the results of the tracking of the at least one feature preferably being used for the initialization.

24. A method in accordance with any one of the preceding claims, **characterised in that** a feature given by a variation or by a value of the parameter values for the echo pulse property is determined for at least one object, in particular on its new formation; and **in that** an object class is associated with the object in dependence on the occurrence of the feature.

25. A computer program with program code means to carry out the method in accordance with any one of the claims 1 to 24, when the program is installed on a computer.

26. A computer program product with program code means which are stored on a computer readable data carrier to carry out the method in accordance with any one of the claims 1 to 24, when the computer program is installed on a computer.

27. A device for the tracking of objects (16, 18) having at least one optoelectronic sensor (10), preferably a laser scanner (10), by means of which spatial separation images of a detection region having spatial separation image points (24, 24', 24") can be detected which can each be obtained by transmission of a pulse of electromagnetic radiation and by detection of the pulse reflected back as an echo pulse from a point or region on a real object (16, 18, 20) as well as by detection of at least one echo pulse property of the echo pulse dependent on the energy of the echo pulse, which each include an angle and a separation, with the echo pulse energy depending on the optical properties of the surface of the point or region and with which in each case at least one value for a parameter for the echo pulse property is associated, and having a data processing device (26) connected to the optoelectronic sensor (10), comprising means for searching for spatial separation image points (24, 24', 24") in a then current spatial separation image in sequential cycles in a then current cycle in each case, wherein the spatial separation image points (24, 24', 24") correspond to an object known from a preceding cycle and means for determining a then current position of the object from spatial separation image points (24, 24', 24") of the then current spatial separation image associated with the object, wherein parameter values of the echo pulse property associated with the spatial separation image points (24, 24', 24") are used; and means for associating a reference evolution of the parameter for the echo pulse property along at least one section of a contour of the object extending along sequential spatial separation image points obtained at increasing angles is associated as a feature with the at least one object, with a comparison between the reference evolution of the parameter for the echo pulse property from a preceding cycle and a then current evolution of the parameter of the echo pulse property given by selected then current spatial separation images (24, 24', 24") and by parameter values for the echo pulse property associated with them being used for the search for the feature in a then current spatial separation image, and with the feature being used for the tracking of the object.

**Revendications**

1. Procédé pour la poursuite d'objets, qui correspondent à des articles (16, 18, 20) dans la zone de détection d'un détecteur (10) pour rayonnement électromagnétique, en particulier d'un scanneur à laser, en se basant sur des images à séparation spatiale, prises en succession temporelle par le détecteur (10), de la zone de détection (14) avec des pixels (24, 24', 24")

   - qui ont été obtenus respectivement par émission d'une impulsion de rayonnement électromagnétique et détection de l'impulsion renvoyée sous forme d'impulsion écho depuis un point ou une zone sur un article (16, 18, 20) et par détermination d'au moins une propriété de l'impulsion écho qui dépend de l'énergie de l'impulsion écho et

- qui contiennent chacun un angle et une distance, dans lequel l'énergie de l'impulsion écho dépend des propriétés optiques de la surface du point ou de la zone, et auquel est associée respectivement au moins une valeur pour un paramètre pour la propriété de l'impulsion écho,

en ce que dans des cycles mutuellement successifs on recherche respectivement dans un cycle actuel dans une image à séparation spatiale actuelle des pixels (24, 24', 24") qui correspondent à un objet connu d'un cycle précédent, et à partir des pixels (24, 24', 24") associés à l'objet dans l'image à séparation spatiale actuelle, on détermine une situation actuelle de l'objet, et on utilise respectivement des valeurs de paramètres de la propriété de l'impulsion écho respectivement associées aux pixels (24, 24', 24") de l'image à séparation spatiales, et on associe à au moins un objet un tracé de référence du paramètre pour la propriété de l'impulsion écho le long d'au moins un tronçon d'un contour de l'objet qui s'étend le long de pixels qui se suivent mutuellement et qui sont obtenus sous des angles croissants, à titre de caractéristique, et pour la recherche de la caractéristique dans une image à séparation spatiale actuelle, on utilise une comparaison entre le tracé de référence du paramètre pour la propriété de l'impulsion écho provenant d'un cycle précédent et le tracé actuel, du paramètre de la propriété de l'impulsion écho, donné par des pixels (24, 24', 24") actuels choisis et par les valeurs de paramètres associées à ces points pour la propriété de l'impulsion écho, et ladite caractéristique est utilisée pour la poursuite de l'objet.

2. Procédé selon la revendication 1,
**caractérisé en ce que** les valeurs de paramètres, associées aux pixels (24, 24', 24"), pour la propriété de l'impulsion écho sont corrigées par référence à la distance depuis le détecteur (10), donnée par le pixel respectif (24, 24', 24").

3. Procédé selon la revendication 1 ou 2,
**caractérisé en ce que** l'on utilise à titre de propriété de l'impulsion écho une largeur de l'impulsion écho respective ou d'une impulsion de signal correspondante d'un élément de réception qui reçoit l'impulsion écho à un niveau prédéterminé.

4. Procédé selon l'une des revendications précédentes,
**caractérisé en ce que** l'on utilise à titre de propriété de l'impulsion écho une surface de l'impulsion écho respective.

5. Procédé selon l'une des revendications précédentes,
**caractérisé en ce que** l'on utilise à titre de propriété de l'impulsion écho une hauteur de l'impulsion écho respective.

6. Procédé selon l'une des revendications précédentes,
**caractérisé en ce que** dans une image à séparation spatiale, on utilise uniquement ceux des pixels (24, 24', 24") auxquels sont associées des valeurs de paramètres qui correspondent à des énergies de l'impulsion écho qui dépassent une énergie minimum prédéterminée.

7. Procédé selon l'une des revendications précédentes,
**caractérisé en ce que** l'on associe à au moins un objet une caractéristique donnée par une grandeur des valeurs de paramètres pour la propriété de l'impulsion écho, et
**en ce que** l'on utilise la caractéristique pour la reconnaissance et/ou la poursuite de l'objet.

8. Procédé selon l'une des revendications précédentes,
**caractérisé en ce que** pour la recherche de la caractéristique donnée, on utilise une corrélation croisée entre le tracé de référence du paramètre pour la propriété de l'impulsion écho et le tracé actuel du paramètre pour la propriété de l'impulsion écho.

9. Procédé selon l'une des revendications précédentes,
**caractérisé en ce que** le tracé de référence pour la caractéristique est actualisé dans un cycle actuel.

10. Procédé selon l'une des revendications précédentes,
**caractérisé en ce que** l'image à séparation spatiale actuelle est segmentée en formant des segments, et
**en ce que** lors de l'association de segments à l'objet, la caractéristique est recherchée dans ceux des pixels (24, 24', 24") et celles des valeurs de paramètres associées qui sont données par des segments qui viennent en considération pour une association à l'objet.

11. Procédé selon l'une des revendications précédentes,
**caractérisé en ce que**, en particulier lors d'un masquage partiel de l'objet par un autre objet, on utilise la caractéristique pour déterminer la situation de l'objet.

12. Procédé selon l'une des revendications précédentes,
**caractérisé en ce que**

pour au moins un objet on détermine au moins une autre caractéristique à partir des images à séparation spatiale,

au moins après une phase initiale, la caractéristique et l'autre caractéristique de l'objet sont poursuivies séparément l'une de l'autre au moins pendant des cycles mutuellement successifs dans lesquels les caractéristiques peuvent être chacune détectée dans la mesure où dans un cycle actuel on peut au moins exécuter la prédiction des situations et/ou des vitesses des caractéristiques et la détermination de valeurs estimatives pour les vitesses des caractéristiques pour des situations actuelles données des caractéristiques, séparément l'une de l'autre, et **en ce que**

en se basant sur les résultats de la poursuite des caractéristiques, on détermine au moins une situation et/ou une vitesse de l'objet.

13. Procédé selon la revendication 12, **caractérisé en ce que** l'autre caractéristique concerne un tronçon de contour caractéristique d'un article (16, 18, 20) dans la zone de détection.

14. Procédé selon la revendication 12 ou 13, **caractérisé en ce que,** pour un article (16, 18, 20) qui présente dans la zone de détection un contour approximativement rectangulaire, on utilise à titre d'autre caractéristique deux côtés de l'article (16, 18, 20) sensiblement perpendiculaires l'un à l'autre.

15. Procédé selon l'une des revendications 12 à 14, **caractérisé en ce que** les déterminations des situations actuelles d'au moins deux caractéristiques du même objet ou article (16, 18, 20) sont effectuées à partir d'une image à séparation spatiale actuelle dans un cycle actuel séparément les unes des autres.

16. Procédé selon l'une des revendications 12 à 15, **caractérisé en ce que**

dans un cycle précédent pour au moins deux caractéristiques du même objet, on prédit les situations des caractéristiques dans un cycle actuel,

à partir des situations prédites des caractéristiques de l'objet, on détermine une situation prédite de l'objet,

on associe à l'objet, en se basant sur la situation prédite de l'objet, des pixels de l'image à séparation spatiale actuelle, et

on détermine des situations actuelles des caractéristiques dans le cycle actuel en se basant sur les pixels (24, 24', 24") associés à l'objet.

17. Procédé selon l'une des revendications 12 à 16, **caractérisé en ce que** les images à séparation spatiale sont segmentées, et **en ce que**, dans le cas où plusieurs segments doivent être associés à un objet, les segments sont regroupés en donnant un nouveau segment.

18. Procédé selon l'une des revendications 12 à 17, **caractérisé en ce que** les images à séparation spatiale sont segmentées, on vérifie si deux caractéristiques pour un objet sont contenues dans un segment, et pour la poursuite indépendante des caractéristiques, on utilise uniquement des parties correspondantes d'un segment.

19. Procédé selon l'une des revendications 12 à 17, **caractérisé en ce que** l'on détermine la vitesse d'un objet à titre de valeur moyenne pondérée des vitesses des caractéristiques pour l'objet.

20. Procédé selon l'une des revendications 12 à 19, **caractérisé en ce que** pour la poursuite des caractéristiques, on prédit tout d'abord les situations des caractéristiques, après détermination des caractéristiques, on détermine dans une image à séparation spatiale actuelles une situation actuelle de la caractéristique en dépendance des situations correspondantes prédites, et pour la détermination de la vitesse de l'objet, on procède à une pondération de la vitesse de celle des caractéristiques pour laquelle les écarts entre la situation prédite de la caractéristique et la situation de cette caractéristique déterminée en se basant sur une image à séparation spatiale actuelle sont plus faibles plus forte que de la vitesse de l'autre caractéristique.

21. Procédé selon l'une des revendications 12 à 20, **caractérisé en ce que,** dans le cas où l'une des caractéristiques dans un cycle actuel ne peut pas être reconnue dans l'image à séparation spatiale actuelle, on prédit une situation de la caractéristique pour le cycle suivant en se basant sur la situation de cette caractéristique prédite pour le cycle actuel.

22. Procédé selon l'une des revendications 19 à 20, **caractérisé en ce que**, dans le cas où l'une des caractéristiques dans un cycle actuel ne peut pas être reconnue dans l'image à séparation spatiale actuelle, on cesse la poursuite de cette caractéristique.

23. Procédé selon l'une des revendications 12 à 22, **caractérisé en ce que,** dans le cas où lors de la poursuite d'un objet à l'aide d'au moins une caractéristique dans un cycle actuel on reconnaît une autre caractéristique, on poursuit également cette autre caractéristique, et on utilise de préférence pour l'initialisation les résultats de la poursuite de ladite au moins une caractéristique.

**24.** Procédé selon l'une des revendications précédentes, **caractérisé en ce que,** pour au moins un objet, en particulier lors de sa nouvelle formation, on détermine une caractéristique donnée par une variation ou par une grandeur des valeurs de paramètres pour la propriété de l'impulsion écho, et **en ce que** l'on associe à l'objet une classe-objet en fonction de l'apparition de la caractéristique.

**25.** Programme d'ordinateur comprenant des moyens formant code de programme, pour mettre en oeuvre le procédé selon l'une des revendications 1 à 24, quand le programme est exécuté sur un ordinateur.

**26.** Produit formant programme d'ordinateur comprenant des moyens formant code de programme qui sont stockés sur un support lisible à l'ordinateur, pour mettre en oeuvre le procédé selon l'une des revendications 1 à 24, quand le programme est exécuté sur un ordinateur.

**27.** Dispositif pour la poursuite d'objets (16, 18) comprenant au moins un détecteur optoélectronique (10), de préférence un scanneur à laser (10) au moyen duquel des images à séparation spatiale d'une zone de détection peuvent être prises avec des pixels (24, 24', 24"), qui sont prises chacune par émission d'une impulsion de rayonnement électromagnétique et détection de l'impulsion renvoyée sous forme d'impulsion écho par un point ou une zone sur un article (16, 18, 20) et détermination d'au moins une propriété de l'impulsion écho qui dépend de l'énergie de l'impulsion écho, et qui contiennent chacun un angle et une distance, dans lequel l'énergie de l'impulsion écho dépend des propriétés optiques de la surface du point ou de la zone, et auquel est associée respectivement au moins une valeur pour un paramètre pour la propriété de l'impulsion écho, et comprenant un système de traitement de données (26) relié au détecteur optoélectronique (10), comprenant :

des moyens pour rechercher des pixels (24, 24', 24") dans une image à séparation spatiale actuelle dans des cycles mutuellement successifs respectivement dans un cycle actuel, dans lequel les pixels (24, 24', 24") correspondent à un objet connu d'un cycle précédent, et des moyens pour déterminer une situation actuelle de l'objet à partir des pixels (24, 24', 24") associés à l'objet dans l'image à séparation spatiale actuelle, en utilisant des valeurs de paramètres, associées aux pixels (24, 24', 24") de la propriété de l'impulsion écho, et des moyens pour associer un tracé de référence du paramètre pour la propriété de l'impulsion écho le long d'au moins un tronçon d'un contour de l'objet, qui s'étend le long de pixels mutuellement successifs obtenus sous des angles croissants, à au moins un objet à titre de caractéristique, et pour la recherche de la caractéristique dans une image à séparation spatiale actuelle, on compare l'un à l'autre le tracé de référence du paramètre pour la propriété de l'impulsion écho provenant d'un cycle précédent et un tracé actuel, donné par des pixels choisis actuels (24, 24', 24") et des valeurs de paramètres associées à celui-ci pour la propriété de l'impulsion écho, du paramètre de la propriété de l'impulsion écho, et la caractéristique est utilisée pour la poursuite de l'objet.

Fig. 1

EP 1 557 693 B1

Fig. 2

S10 — Erfassen und Einlesen eines Abstandsbildes mit Echopulsbreitenwerten

S12 — Abstandskorrektur der Echopulsbreitenwerte

S14 — Elimination von Abstandsbildpunkten mit Echopulsbreitenwerten kleiner als eine vorgegebene korrigierte Mindestechopulsbreite

S16 — Segmentierung des Abstandsbildes mittels eines Abstandskriteriums

S18 — Für jedes Objekt des vorhergehenden Zyklus: Zuordnung von Segmenten zu Objekten

S20 — Bildung neuer Objekte aus noch nicht zugeordneten Segmenten

S22 — Ermittlung von Lagen und ggf. Geschwindigkeiten der Objekte

S24 — Prädiktion neuer Objektlagen im nächsten Zyklus

S26 — Ausgabe bzw. Speicherung der ermittelten Objektlagen und -geschwindigkeiten

Fig. 3

| | |
|---|---|
| S30 | Erfassen und Einlesen eines Abstandsbildes mit Echopulsbreitenwerten |
| S32 | Abstandskorrektur der Echopulsbreitenwerte |
| S34 | Segmentierung des Abstandsbildes mittels eines Abstandskriteriums |
| S36 | Für jedes Objekt: Zuordnung von Segmenten zu dem jeweiligen Objekt auf der Basis prädizierter Lagen und aktueller EPB-Verläufe |
| S38 | Bildung neuer Objekte aus noch nicht zugeordneten Segmenten |
| S40 | Ermittlung von Lagen und ggf. Geschwindigkeiten der Objekte unter Verwendung von aktuellen EPB-Verläufen sowie Ermittlung/Aktualisierung von EPB-Referenzverläufen |
| S42 | Prädiktion neuer Objektlagen im nächsten Zyklus |
| S44 | Ausgabe bzw. Speicherung der ermittelten Objektlagen und -geschwindigkeiten |

Fig. 4

Fig. 5

Fig. 6

| | |
|---|---|
| S50 | Erfassen und Einlesen eines Abstandsbildes mit Echopulsbreitenwerten |
| S52 | Abstandskorrektur der Echopulsbreitenwerte |
| S54 | Segmentierung des Abstandsbildes mittels eines Abstandskriteriums |
| S56 | Für jedes Objekt: Ermittlung einer prädizierten Lage |
| S58 | Für jedes Objekt: Zuordnung von Segmenten zu dem jeweiligen Objekt auf der Basis prädizierter Lagen und aktueller EPB-Verläufe |
| S60 | Für jedes Objekt: Segmentfusion |
| S62 | Für jedes Objekt: Ermittlung der aktuellen Lagen der Merkmale und der maximalen Längen und Breiten |
| S64 | Bildung neuer Objekte aus noch nicht zugeordneten Segmenten und Ermittlung von Merkmalen |
| S66 | Ermittlung der Innovationsvektoren |
| S68 | Ermittlung von Lagen und ggf. Geschwindigkeiten der Objekte unter Verwendung von Merkmalen |
| S70 | Ausgabe bzw. Speicherung der ermittelten Objektlagen und -geschwindigkeiten |
| S72 | Für jedes Objekt: Prädiktion der Lagen von Merkmalen |

Fig. 7

**EP 1 557 693 B1**

**IN DER BESCHREIBUNG AUFGEFÜHRTE DOKUMENTE**

**In der Beschreibung aufgeführte Patentdokumente**

- EP 1094336 A2
- US 20010052844 A1